Europäisches Patentamt

European Patent Office

Office européen des brevets

(19)

(11) **EP 1 519 286 A1**

(12) **EUROPEAN PATENT APPLICATION**
published in accordance with Art. 158(3) EPC

(43) Date of publication:
**30.03.2005 Bulletin 2005/13**

(51) Int Cl.$^7$: **G06F 17/60**, G06F 15/00,
G06F 12/14

(21) Application number: **02741361.6**

(22) Date of filing: **28.06.2002**

(86) International application number:
**PCT/JP2002/006581**

(87) International publication number:
**WO 2004/003806 (08.01.2004 Gazette 2004/02)**

(84) Designated Contracting States:
**AT BE CH CY DE DK ES FI FR GB GR IE IT LI LU
MC NL PT SE TR**

(71) Applicant: **FUJITSU LIMITED
Kawasaki-shi, Kanagawa 211-8588 (JP)**

(72) Inventor: **MURASHITA, Kimitaka,
c/o FUJITSU LIMITED
Kawasaki-shi, Kanagawa 211-8588 (JP)**

(74) Representative: **Sunderland, James Harry
Haseltine Lake,
Imperial House,
15-19 Kingsway
London WC2B 6UD (GB)**

(54) **CONTENT PROVIDING METHOD, CONTENT PROVIDING SYSTEM, CONTENT PROVIDING APPARATUS, AND CONTENT REPRODUCTION APPARATUS**

(57)    In order to secure the right of a legitimate purchaser of a content by ensuring the execution of operations (reproduction, copying, or the like) permitted by the Copyright Law while thoroughly protecting the rights of the original copyright owner, purchaser identification information that can identify the purchaser individual is incorporated in the content (or the medium which stores the content) provided from the content manager side to the purchaser and the use of the content is allowed only when a user of content is authenticated to be a legitimate purchaser by the use of the purchaser identification information.

FIG. 1

## Description

TECHNICAL FIELD

The present invention relates to a content providing method, content providing system, content providing apparatus, and content reproducing apparatus which authenticate the user (purchaser) only who has officially paid the content to use the digital content such as music, images, applications or the like which run on a personal computer.

BACKGROUND ART

In general, for example, music and other content are stored in music media (records, cassette tapes, CD (Compact Disk), or the like), and a user who wants to listen to the music purchases a music medium. The cost which the user paid at a shop is handed to an original copyright owner (song-writer, composer, performing musician, singer, or the like) via a shop, music sales company, or the like. The user is granted the right to use the music by purchasing a music medium. By this kind of flow of content and counter value, the user obtains content and the original copyright owner obtains the content cost, and the shop, music sales company, or the like who mediate between the user and the original copyright owner obtain a profit margin.

In recent years, by digitization of content and popularization of personal computer (hereinafter, referred to as the "PC") and the Internet at home, the people have had the environment in which music and other content can be easily obtained as digital data. Under this kind of environment, the user is allowed by Copyright Law Article 30 to create digital data (for example, MP3 (MPEG Layer 3) data) from a music CD which the user purchased as a copy for private use as far as the user individual uses the data noncommercially, but the user is not allowed to provide the copied data to unspecified third parties. However, nowadays, by the advent of data exchange software such as Napstar (registered trademark), Gnutella (registered trademark), or the like, the content data can be easily exchanged between users, and illegally copied content data are flooding on the Internet.

Therefore, many mechanisms have been proposed to protect the copyright of digital content. For existing copyright protection methods, for example, the following can be mentioned:

    (1) SCMS (Serial Copy Management System);
    (2) SDMI (Secure Digital Music Initiative)
    (3) Compensation System for Digital Private Recording;
    (4) Music Distribution Method, Transmission Apparatus and Method, and Reproducing Apparatus and Method (Japanese Patent Application Laid-Open (Kokai) No. 2000-90039: Sony Corporation); and

    (5) Information Recording Apparatus and Information Reproducing Apparatus and Billing Apparatus and Judging Apparatus, and Updating Apparatus, and Information Utilizing Apparatus, and Key Distributing Apparatus, and Recording Media (Japanese Patent Application Laid-Open (Kokai) No. HEI11-283327: Toshiba Corporation).

These existing copyright protection methods (1) through (5) will be explained as follows:

(1) SCMS

SCMS is a digital copy generation control technique. That is, it is a system that allows copying of one generation only when digital data is copied in a digital form. For example, when the user creates digital data from a CD the user purchased, the user is allowed to create digital data (child data) from the CD but the user is not allowed to create digital data (grandchild data) from the digital data (child data). By carrying out this kind of generation control, the digital data is prevented from being copiedwithout limit. SCMS is adopted for MD (Mini Disc), DAT (Digital Audio Tape), or the like for household apparatus.

(2) SDMI

SDMI is a project established with initiative taken by the Recording Industry Association of America (RIAA) to protect the copyright in distributing and selling music on the Internet. SDMI adopts a system for permitting the use of the data on the terminal (cellular phone, PC, or the like) only, which has downloaded the music data from the network. For a technique with this SDMI applied, there is OpenMG (regiatered trademark) which Sony Corporation developed. This OpenMG allows copying pursuant to the predetermined rule (restriction to copy-to points, restriction of number of times of copies, or the like) when data is copied between recording media (magic gate memory stick) that conform to OpenMG.

(3) Compensation System for Digital Private Recording

In Copyright Law Article 30, Item 2, even for the purpose of privately using data, if copying is carried out by the use of apparatus or media (MD, DAT, or the like) of a digital system provided by the government ordinance, payment of compensation to copyright owners is made compulsory. In the Compensation System for Digital Private Recording, the right of copyright owner is secured not by the technique but by the rule. That is, the manufacturer adds a specified amount (compensation for digital private recording) to the prices of digital data recording apparatus and recording media and sells them to users, and distributes the compensation obtained when these pieces of apparatus and media are sold to copyright owners of content.

(4) Technique disclosed in Japanese Patent Application Laid-Open (Kokai) No. 2000-90039

In the technique disclosed in the Publication, a private key and a public key are created in conformity to the identification information (ID) specific to the apparatus, the music data is encrypted by the public key and the encrypted music data (encrypted content) is recorded. When the music data is reproduced, the encrypted data is decrypted by the private key stored in the apparatus. Because the music data is encrypted by ID specific to the apparatus, the encrypted content cannot be decrypted by any reproducing apparatus with different ID and naturally, the data cannot be reproduced.

(5) Technique disclosed in Japanese Patent Application Laid-Open (Kokai) No.HEI11-283327

In the technique disclosed in the Publication, content is encrypted by the first encryption means and recorded in a medium and at the same time, the license information including the use conditions to restrict the use of the relevant content and the first decryption key for decrypting the encrypted content is encrypted by the second encryption means and stored in the media. When the content is used, the second decryption key stored in the reproducing apparatus is used to decrypt the license information, and based on the use conditions in the license information, the adequacy of the use of content is judged, and if the use is accepted, the first decryption key in the license information is used to decrypt and reproduce the content.

As described above, in recent years, as digitization of content progresses, the content is easily copied and distributed, and the right of the copyright owner has become threatened. Consequently, as a method for protecting the right of copyright owner, various methods as described above (for example, above-mentioned Copyright Protection Methods (1) through (5)) have been proposed, but in the conventional method, there are problems in which the official content use charge cannot be collected from the user who copied and the right allowed for official users (reproduction of private use, or the like) is restricted, too.

The relevant problems of the above-mentioned copyright protection methods (1) through (5) will be described as follows:

(1) Problems of SCMS

SCMS restricts preparation of grandchild copies but as far as child copies are concerned, child copies can be prepared with no restriction. Consequently, even if an evil-minded content user prepares child copies in a large quantity and sells them to any third party, SCMS cannot prevent the action. On the other hand, even a user who officially purchased content (for example, CD) can copy content in a CD into an MD, but is not allowed to copy the content from the MD further to other MD even within the range of private use. Under the Copyright Law, copies are permitted within the range of private use, but SCMS restricts copying only (to prepare child copies from the master content medium) by a specific procedure. In this way, SCMS has problems in that SCMS cannot prevent illicit use of content, protection of a copyright owner is not sufficient, and a legal use of a content user is restricted.

(2) Problems of SDMI

SDMI restricts the number of times of copy preparations. That is, it does not control copy generations as is the case of SCMS but controls the number of copying times, but the problems of SDMI are the same as those of SCMS. That is, because copying can be carried out in the number of times licensed by SDMI, even if an illicit content user prepares copies in the number licensed by SDMI and sells to any third party, SDMI cannot prevent the action. On the other hand, even if a user who has officially downloaded content intends to use the downloaded content in a plurality of reproducing apparatus which the user him/herself possesses such as PC, cellular phone, PDA (Personal Digital Assistant), portable music reproducing apparatus (MP3 player or the like), or the like, the user is only allowed to prepare a limited number of copies and can only use the content on limited apparatus only. This restricts the private use of the user, too. In this way, though the restriction is put in a wider range than SCMS but since SDMI cannot prevent the unauthorized use of content, SDMI has problems in that protection of the copyright owner is not sufficient and the legal use of the content user is restricted.

(3) Problems of Compensation System for Digital Private Recording (Copyright Law Article 30, Item 2)

In the Compensation System for Digital Private Recording, the private recording compensation is added to prices of specific music media and apparatus provided by the government ordinance. However, nowadays, digital content is stored not only in the music media but also general digital recording media. In this kind of digital recording media, it is possible to store data other than content, and for digital recording media, in addition to general media such as floppy disk (registered trademark), hard disk, MO, CD-R. CD-RW, or the like, in recent years, new media such as DVD-R, DVD-RAM, DVD-RW, DVD+RW, or the like have come onstage one after another, and in recording media such as Compact Flash (registered trademark), Smart Media (registered trademark), or the like which are used for image storage media for digital cameras, apparatus which can store various data have appeared. Today under these circumstances, the music media and apparatus provided by the government ordinance cover only part of the apparatus and media which utilize music content, and it is difficult to say that the right of the copyright owner is thoroughly secured.

(4) Problems of the technique disclosed in Japanese Patent Application Laid-Open (Kokai) No. 2000-90039

In the technique (method (4)) disclosed in the publication, regeneration of content is controlled by the use of ID specific to the apparatus. That is, if ID specific to the apparatus which is registered in advance coincides with ID specific to the apparatus used for reproduction, decryption of content is enabled and the reproduction of content is enabled, too, whereas if it does not coincide, decryption is refused and reproduction cannot be carried out, either. By this, for example, content can be reproduced and utilized only on the cellular phone or PC which has downloaded the content. However, by this method (4), only one apparatus is allowed to use the content which the user purchased. Even when the user has purchased the content, the user is not allowed to utilize the content in any apparatus other than the apparatus. PC, cellular phone, or the like are replaced by purchase in units of several years, but if the apparatus is replaced, by the method (4), the content which has been purchased before cannot be utilized in the new apparatus. In this way, the method (4) excessively restricts the right of the user to utilize content and the conditions disadvantageous to the user are imposed in exchange of protection of the right of the content right owner.

(5) Problems of the technique disclosed in Japanese Patent Application Laid-Open (Kokai) No. HEI11-283327

By the technique (method (5)) disclosed in the publication, a decryption key for decrypting the encrypted content is used for the license information of the content user. This license information is further encrypted by the second encryption key to be stored in the content. The decryption key for decrypting the license information is stored in the reproducing apparatus. Consequently, the method (5), too, the same as the method (4), cannot utilize content in a specific apparatus only and has the same problems as the method (4) has.

As described above, it cannot be said that the existing copyright protection techniques thoroughly protect the right of the copyright owner and on the other hand, restriction is unilaterally imposed to the content user in such a manner as to prevent the user from carrying out operations which should be originally allowed for the content user.

The present invention is made in view of the above-mentioned problems and it is an object of the present invention to secure the user right by ensuring the execution of operations (reproduction, copy, or the like) permitted under the Copy Right Law for the content user (purchaser) while thoroughly protecting the right of the copyright owner, and in addition, to collect the content charge from the user of the copy content, from whom the content charge has been unable to be collected.

DISCLOSURE OF THE INVENTION

In order to achieve the above-mentioned object, the content providing method according to the present invention is a method for a content manager to supply content to a purchaser, comprises the steps of: paying price for the use of the content to the content manager by the purchaser; incorporating, on the content manager side, purchaser identification information, which can identify the purchaser individual who paid the price, in the content or a medium which stores the content ; providing the content or the medium, in which the purchaser identification information is incorporated, from the content manager side to the purchaser; and authenticating whether or not user of the content is the legitimate purchaser using the purchaser identification information incorporated in the content or the medium in order to permit the user of the content to use the content only when the user of the content is the legitimate purchaser.

In such event, the content providing method may further comprise a step of acquiring the purchaser identification information from the purchaser who has paid the price in order to incorporate the purchaser identification information in the content or the medium.

Further, the content providing method may further comprise a step of acquiring user identification information, which can identify the user individual, from the user of the content for carrying out the authentication, wherein the authentication is carried out by comparing the acquired user identification information with the purchaser identification information incorporated in the content or the medium.

Further, the content providing method may further comprise a step of acquiring user identification information, which can identify the user individual, from the user of the content for carrying out the authentication and registering in advance the user identification information to the instrument which is used when the user uses the content, wherein the authentication is carried out by comparing the user identification information registered in advance to the instrument with the purchaser identification information incorporated in the content or the medium when the user uses the content with the instrument.

Further, the content providing method may further comprise the steps of: generating an encryption key from the purchaser identification information; and encrypting the content by the encryption key to obtain the encrypted content, wherein the purchaser identification information is incorporated in the encrypted content or the medium, and the encrypted content or the medium, in which the purchaser identification information is incorporated, is provided from the content manager side to the purchaser who paid the price. In this case, the content providing method further comprises the steps of: generating a decryption key from the purchaser identification information incorporated in the encrypted content or the medium in the event that the user of the content is authenticated as the legitimate purchaser; and decrypting the encrypted content by the decryption key to obtain the original content.

A content providing system according to the present invention is for providing content to a purchaser who has paid price for the use of the content, and comprises: a content management server which controls the content to be provided to the purchaser; a purchaser identification information incorporating apparatus which incorporates purchaser identification information, whichcan identify the purchaser individual who has paid the price, in the content to be provided from the content management server to the purchaser or in a medium in which the content is stored; an instrument which is used when a user of the content uses the content; and an authentication apparatus which authenticates whether or not a user of the content is the legitimate purchaser using the purchaser identification information incorporated in the content or the medium in order to allow the use of the content by the instrument only when the user of the content is the legitimate purchaser.

In this case, the content providing system may be configured in such a way that the authentication apparatus is incorporated in the instrument, and comprise a purchaser identification information input section for the purchaser to input the purchaser identification information.

Further, the content providing system may further comprise a user identification information input section for the user of the content to input user identification information that can identify the user individual in order to carry out the authentication by the authentication apparatus, wherein the authentication apparatus carries out the authentication by comparing the user identification information input from the user identification information input section with the purchaser identification information incorporated in the content or the medium.

Further, the content providing system may further comprise a user identification information writing apparatus for acquiring user identification information that can specify the user individual from the user of the content to carry out the authentication by the authentication apparatus and for writing and registering the user identification information in the instrument in advance, wherein the authentication apparatus carries out authentication by comparing the user identification information registered in the instrument with the purchaser identification information incorporated in the content or in the medium when the user uses the content with the instrument.

In this case, in the content providing system, multiple pieces of user identification information, which can identify multiple user individuals, respectively, are written and registered in the instrument by the user identification information writing apparatus, and the' authentication apparatus compares the multiple pieces of user identification information registered in the instrument with the purchaser identification information incorporated in the content or in the medium and allows the use of the content in the instrument upon accreditation in which any one of the multiple pieces of user identification information coincides with the purchaser identification information.

In this case, in the content providing system, the user identification information writing apparatus is installed in a store that sells the instrument, when a user who uses the instrument purchases the instrument at the store, the user identification information of the user is written and registered in the instrument by the user identification information writing apparatus. Further, In the content providing system an initialization apparatus, which initializes and deletes the user identification information written and registered to the instrument is equipped in the instrument.

In the content providing system trial use information which prescribes trial use allowable range of the content is added in the content, even when it is accredited that the user of the content is not a legitimate purchaser by the authentication apparatus, the use of the content with the instrument is allowed within the range which conforms to the trial use information. Information concerning a procedure for receiving the content from the content management server is added to the content.

Further, content providing system may further comprise a purchaser identification information changing apparatus which changes the purchaser identification information which has already been incorporated in the content or in the medium to another purchaser identification information, wherein in the event that an owner of the content is not a legitimate purchaser, the purchaser identification information changing apparatus changes, in exchange of the price paid by the owner, the purchaser identification information which has already been incorporated in the content or in the medium to the identification information that can identify the owner individual.

Further, the content providing system may further comprise a purchaser management table for holding a list of purchasers who purchased the content, and a content distribution management apparatus that counts, on the basis of the purchaser management table, the number of changes of the purchase identification information on each content provided from the content management server according to the original purchaser of each content, wherein the price that complies with the number of changes counted by the content distribution management apparatus is paid to the original purchaser.

Further, the content providing system may further comprise an encryption key generating apparatus which generates an encryption key from the purchaser identification information, and an encryption apparatus which encrypts the content by the encryption key generated by the encryption key generating apparatus and obtains the encrypted content, wherein the encrypted content or the medium with the purchaser identification information incorporated by the purchaser identification information incorporating apparatus is provided to the purchaser who has paid the price. In this case, the content providing system further comprises a decryption key generating apparatus which generates a decryption key from the purchaser identification information incorporated in the encrypted content or in the medium when a user of the content is authenticated as the legitimate purchaser by the authentication apparatus, and decryption apparatus which decrypts the encrypted content by the decryption key generated by the decryption key generating apparatus and obtains the original content.

On the other hand, a content providing apparatus according to the present invention if for providing content to a purchaser who has paid price for the use of the content and which comprises a content holding section which holds the content to be provided to the purchaser, and a purchase identification information incorporating section which incorporates the purchaser identification information which can identify the purchaser individual in the content to be provided to the purchaser or in the medium which stores the content. In this case, the content providing apparatus may further comprise a purchaser identification information input section for inputting the purchaser identification information. Further, the content providing apparatus further comprises an encryption key generating section which generates an encryption key from the purchaser identification information, and an encryption section which encrypts the content by the encryption key generated by the encryption key generating section and obtains the encrypted content, wherein the encrypted content or the medium with the purchaser identification information incorporated by the purchaser identification information incorporating section is provided to the purchaser who has paid the price.

Further, a content reproducing apparatus according to the present invention is for reproducing content with purchaser identification information which can identifies the purchaser, or reproducing content in a medium with the purchaser identification information incorporated in advance, and which comprises a user identification information input section for inputting user identification information which can identify the user individual who reproduces the content, and an authentication section that authenticates whether or not a user of the content is a legitimate purchaser by comparing the purchaser identification information with the user identification information input from the user identification information input section, wherein reproduction of the content is allowed only when the user of the content is authenticated as the legitimate purchaser by the authentication section.

The content reproducing apparatus according to the present invention is for reproducing content with purchaser identification information which can identifies the purchaser, or reproducing content in the medium with the purchaser identification information incorporated in advance, and which comprise a user identification information storing section for storing user identification information which can identify the user individual who uses the content reproducing apparatus and which is written and registered in advance, and an authentication section which authenticates whether or not a user of the content is a legitimate purchaser by comparing the purchaser identification information with the user identification information input from the user identification information input section, wherein reproduction of the content is allowed only when the user of the content is authenticated as the legitimate purchaser by the authentication section.

In this case, in the content reproducing apparatus, multiple pieces of user identification information, which can identify multiple user individuals, respectively, are written and registered in the user identification information storing section, and the authentication section compares the purchaser identification information with the multiple pieces of user identification information registered to the user identification information storing section, and allows the reproduction of the content upon accreditation in which the purchaser identification information coincides with any one of the multiple pieces of user identification information,.

Further, the content reproducing apparatus may further comprise a user identification information writing section which acquires the user identification information and writes and registers to the user identification information storing section, and an initializing section which initializes and deletes the user identification information written and registered to the user identification information storing section.

Further, in the content reproducing apparatus, the content is provided as encrypted content which is encrypted by an encryption key generated from the purchaser identification information. The content reproducing apparatus may further comprise a decryption key generating section which generates a decryption key from the purchaser identification information when the user of the content is authenticated as the legitimate purchaser by the authentication section, and a decryption section which decrypts the encrypted content by the decryption key generated by the decryption key generating section and obtains the original content.

Further, In the content providing system, biometric information of the purchaser or minutia data extracted from the biometric information of the purchaser is used as the purchaser identification information, and biometric information of the user or minutia data extracted from the biometric information of the user is used as the user identification information. When the purchaser identification information completely coincides with the user identification information, the authentication apparatus accredits that the user is not a legitimate purchaser and refuses the use of the content.

According to the content providing method, content providing system, content providing apparatus, and content reproducing apparatus according to the present invention, when a purchaser pays a counter value (content use charge) to a content manager and purchases content, on the content manager (content management server, content providing apparatus) side, in the content or in a medium that stores the content, purchaser identification information that can identify the purchaser individual is incorporated and the content or the medium is provided to the purchaser. And only when it is authenticated by the use of the purchaser identification information that the content user is a legitimate purchaser, the use of the content is permitted. By this, the use of digital content such as music or image, or applications or the like that run on PC is able to be permitted to the purchaser only who has officially paid the content use charge and purchased, and it is able to ensure the execution of operations (reproduction, copying, or the like) approved by the Copyright Law for the legitimate purchaser while the right of the original copyright owner is thoroughly protected.

That is, because the purchaser identification information is incorporated in the copied content, too, as far as the user is the legitimate purchaser, the copy content can be used, but because any one other than the legitimate purchaser cannot be authenticated as the legitimate purchaser, the copy content cannot be used. Consequently, if any one other than the legitimate purchaser hopes to use the copy content, she/he must pay the content use charge, and therefore, it becomes possible to collect the content use charge even from the copy content users from whom no content use charge has been collected, and the right of the original copyright owner can be definitely protected.

In addition, by configuring in such a manner as to incorporate an authentication apparatus (authentication section) to authenticate that the content user is a legitimate purchaser in an apparatus (content reproducing apparatus) used for using the content, at the same time, write and register the user identification information in advance in the above-mentioned apparatus and authenticate by comparing the user identification information and the purchaser identification information registered to the apparatus when the content is used in the above-mentioned apparatus, it becomes possible to eliminate the inconvenience for the user to enter the user identification information every time the user uses content and it becomes no longer necessary to provide a special function to enter the user identification information in the apparatus.

In such event, by configuring in such a manner as to write and register in advance multiple pieces of user identification information in the apparatus, and permit the use of content in the apparatus when the purchaser identification information coincides with any one of the multiple pieces of user identification information, for example, a wife can use content which a husband has purchased. This kind of use is the right permitted for the purchaser of the literary works according to the Copyright Law, and by the above-mentioned configuration, the right for the purchaser can be secured while the right of the original copyright owner is protected.

In addition, by configuring to install a device for entering the user identification information into the above apparatus to a shop where the above-mentioned apparatus is sold, and enter and register the user identification information into the apparatus at the shop in the event that the user purchases the apparatus, it is no longer necessary to equip any special function to enter the user identification information to the apparatus.

Furthermore, by providing the apparatus with a function to initialize and delete the user identification information in the apparatus, when the apparatus is sold to any third party, the user identification information in the apparatus can be deleted by the use of the function. Consequently, if ever content remains in the apparatus, the third party cannot use the content and the right of the original copyright owner can be protected.

In addition, in the event that the trial information (number of permissible trial use times, trial use allowable time, or the like) which define the trial use allowable range of the content is added to the content and it is recognized that the content user is not the legitimate purchaser, by configuring to permit the use of the content in the apparatus within the range that conforms to the trial use information, it is possible to permit the user who failed the authentication to use the content in the specified trial use allowable range. By this, even the user who is not a legitimate purchaser can trially use content. In the event the user hopes to officially purchase the content as a result of trially using the content, the user does the legitimate purchase procedure to the content manager (content management server, content providing apparatus). In such event, by adding the information on the procedure for receiving the content providing service from the content management server, even a user who has never used the content management server can officially and immediately purchase the content from the content management server by referring to the information.

By using the purchaser biometric information or minutia data extracted from the purchaser biometric information for the purchaser identification information, and at the same time, by using the user biometric information or the minutia data extracted from the user biometric information for the user identification information, an illicit use of any third party who has no right to use the content can be definitely prevented. However, purchaser biometric information cannot completely coincide with the user biometric information even if they are the information of the same person, if they are collected in different periods. Consequently, if they coincide with each other completely bit by bit, conversely, there is a high possibility that some kind of fraudulence has been committed. In such event, by configuring to recognize the user as a illegitimate purchaser and to refuse the use of content, the right of the original copyright owner can be still more definitely protected.

On the other hand, in the event that the content owner is not a legitimate purchaser, by configuring to change the purchaser identification information already incorporated in content or a medium to the identification information that can identify the owner individual in exchange of the counter value to be paid by the owner, the content manager such as the original copyright owner, or the like can officially collect the content use charge (counter value) not only from the person who officially purchased content but also a user who indirectly possessed content such as file sharing software or the like. In such event, the number of changes of the purchaser identification information for each content is counted for every original purchase of each content and the counter value that corresponds to the counted number of changes may be paid to the original purchaser, and by this, the profit will be restored to purchasers who contributed to promotion of selling content and brought about profits to the content manager.

In addition, by configuring to decrypt the encrypted content by the decryption key generated from the purchaser identification information to obtain the original content when the content user is authenticated to be the legitimate purchaser while the content is encrypted by an encryption key generated from the purchaser identification information to provide to the user, even if purchaser information incorporated in content or a medium is rewritten, it is unable to recover the encrypted content to the original condition by the rewritten purchaser identification information, and it is possible to definitely prevent any ill-willed third party (person other than the legitimate purchase) from using the content.

BRIEF DESCRIPTION OF THE DRAWINGS

Fig. 1 is a flow chart for describing the first example of a flow of basic processing in a content providing system according to the present invention;
Fig. 2 is a block diagram for explaining basic configuration example and operations of the content providing system according to the present invention;
Fig. 3 is a schematic view for explaining a basic configuration example and operation of a content providing apparatus (automatic content vending machine) according to the present invention;
Fig. 4 is a flow chart for explaining the second example of a flow of basic processing in the content providing system according to the present invention;

Fig. 5 is a diagram for explaining minutiae of fingerprint data;
Fig. 6 is a diagram for explaining the third example of a flow of basic processing in the content providing system according to the present invention;
Fig. 7 is a flow chart for explaining the fourth example of a flow of basic processing in the content providing system according to the present invention;
Fig. 8 is a block diagram that indicates a configuration of a content providing system as the first embodiment according to the present invention;
Fig. 9 is a block diagram that indicates a configuration of a content management server (content providing apparatus) in the first embodiment;
Fig. 10 is a block diagram that indicates a configuration of a user terminal in the first embodiment;
Fig. 11 is a block diagram that indicates a player (content reproducing apparatus) in the first embodiment;
Fig. 12 is a communication sequence diagram between the user terminal and the content management server in the first embodiment;
Fig. 13 is a diagram that describes a fingerprint data storing method in content in the first embodiment;
Fig. 14 is a block diagram that indicates a player (content reproducing apparatus) in the second embodiment;
Fig. 15 is a block diagram that indicates a configuration of a content providing system as the third embodiment according to the present invention;
Fig. 16 is a block diagram that indicates a configuration of an ID changing server (purchaser identification information changing apparatus) in the third embodiment;
Fig. 17 is a block diagram that indicates a configuration of a content providing system as the fourth embodiment according to the present invention;
Fig. 18 is a block diagram that indicates a configuration of a content encryption server (content providing apparatus) in the fourth embodiment; and
Fig. 19 is a block diagram that indicates a configuration of an encrypted content player (content reproducing apparatus) in the fourth embodiment.

BEST MODE FOR CARRYING OUT THE INVENTION

Referring now to drawings, embodiments according to the present invention will be described as follows.

[1] Description on the flow of basic processing and basic configuration of the present invention

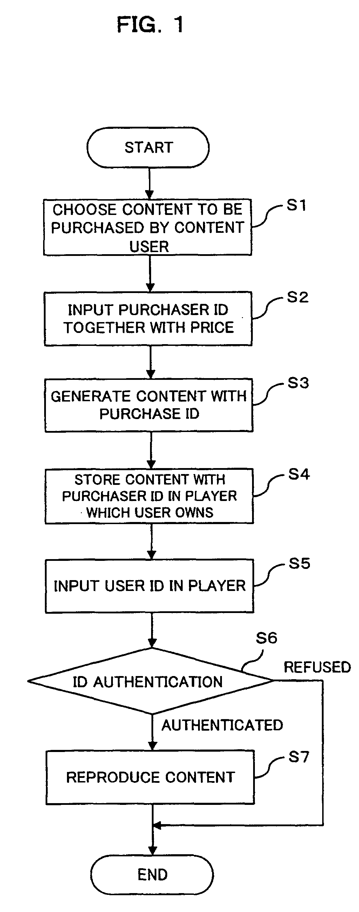

Referring to Fig. 1 through Fig. 7, a flow of basic processing and basic configuration of the present invention will be described.
The present invention intends to allow the user (purchaser) only who has officially paid the content use charge and purchased content to use digital content with an intelligent property right (for example, music and images, or applications or the like that run on PC). In order to achieve this, in the present invention, biometric information (for example, fingerprint data or the like) of the purchaser (user) is stored in content as the purchaser identification information, and by authenticating the content user using the biometric information at the time of using content, the user (legitimate purchaser) only who can officially use content is allowed for the use. And in the present invention, in the event that the user possesses the copy data (data in which biometric information of a person other than the user or data in which no biometric information is stored), the right owner of the content (content manager such as original copyright owner or the like) collects the content use charge from the user and in exchange of the content use charge, the user biometric information is stored in content (copy data). By this, the content right owner is able to collect the content use charge from the user of the copy content. On the other hand, the user is able to copy content if the user is the purchaser him/herself (legitimate purchaser) and use the copy content. This act is the act permitted for the legitimate purchaser under the Copyright Law and is permitted if the present invention is used and the right of the legitimate purchaser under the Copyright Law is secured.

[1-1] Flow of basic processing in the content providing system according to the present invention (example 1)

Fig. 1 is a flow chart (Steps S1 through S7) for describing a flow of basic processing (Example 1) in a content providing system according to the present invention. In the embodiment, to a content reproducing apparatus (for example, a music player, VTR, DVD player, or the like) which the content user possesses, a section to input the user identification information (hereinafter, referred to as the "user ID") that can identify the owner (content user) individual of the apparatus should be equipped.

In the event that a content purchaser purchases content to be reproduced at the content reproducing apparatus, as shown in Fig. 1, the content purchaser chooses content to be purchased (Step S1), pays the counter value for the use of the content to a content manager (for example, a music distribution company or the like) and at the same time notifies the purchaser identification information (purchaser ID) that can identify the purchaser individual (Step S2). On the content manager side, in exchange of the counter value, the purchaser ID obtained from the purchaser is stored in content or a medium (CD, DVD, MD or the like) in which the content is stored, and the content or the medium with the purchaser ID incorporated is offered to the purchaser (Step S3).

When the user uses the content, the user stores the content or the medium with the purchaser ID incorporated in the content reproducing apparatus (Step S4), and enters the user ID in the content reproducing apparatus through the user identification information input section (Step S5). And in the content reproducing apparatus, by comparing the user ID obtained in Step S5 with the purchaser ID incorporated in the content or in the medium, whether the user is the legitimate purchaser or not is authenticated (Step S6).

When the user ID coincides with the purchaser ID, it is authenticated that the user is the purchaser ("authentication" route of Step 6), and the content is reproduced in the content reproducing apparatus (Step S7). On the other hand, in the event that the user ID does not coincide with the purchaser ID, it is judged that the user is not the purchaser ("refused" route of Step 6) and the process is finished without carrying out reproduction. In the event that the access is refused, an error notice may be given to notify the user of the denial.

By providing and reproducing content in conformity with the procedure as shown in Fig. 1, the content which the user purchased is allowed to be reproduced only on the apparatus (content reproducing apparatus) which the user owns, and even if any third party owns a copy of the content, she/he cannot use the content. In addition, the content which the user purchased can be reproduced in any apparatus as far as it is the apparatus the user owns that can reproduce the content.

In such event, as the purchaser ID and the user ID, it is desirable to use biometric information (for example, fingerprints, face image, iris of the eyes, palm pattern, voice, signature or the like) which are physical characteristics of the purchaser individual or user individual and that can uniquely identify a purchaser or a user. The personal identification number, password, or the like can be distributed as data as it is. Consequently, in the event that the personal identification number or password is used as the purchaser ID, it is possible to distribute together with the content, and illicit use of any third party who is not authorized to use the content cannot be prevented. On the contrary, since the biometric information is the information which cannot be separated from the user, it is possible to ensure that the user exists on the spot. By using biometric information for the purchaser ID to be incorporated in content or a medium, even if the content is passed into the hands of any third party, the third party cannot use the content unless the legitimate purchase is present on the spot.

[1-2] Basic configuration example and operation of the content providing system according to the present invention

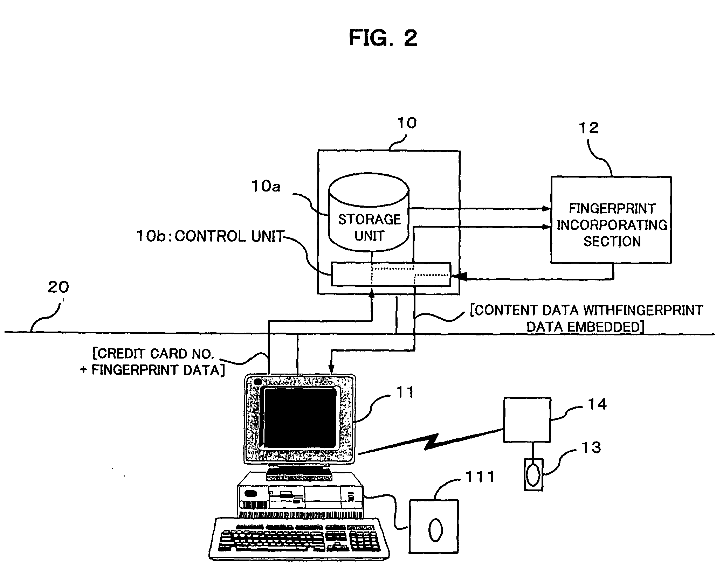

Referring now to Fig. 2, a system configuration example when fingerprint data is used for biometric information is described. Fig. 2 is a block diagram that describes a basic configuration example and operation of the content providing system according to the present invention.

The content providing system shown in Fig. 2 provides content to the purchaser who paid the counter value for the use of the content, and comprises a content management server 10, personal computer (user terminal, hereinafter, referred to as "PC") 11, fingerprint incorporating section 12, player 14, and network 20. In Fig. 2, there shown is a case in which a user who is a content purchaser and user purchases music data (musical composition) from the content management server 10 which a content dealer (content manager) installs on the Internet using the PC 11.

Here, the PC 11 and the player 14 are those which the user owns at home and the PC 11 is connected communicatably with the content management server 10 via the network 20. To this PC 11, a fingerprint sensor 111 is attached, and fingerprint data of the user (purchaser) read by this fingerprint sensor 111 is notified to the content management server 10 via the PC 11 and the network 20. That is, these PC 11 and fingerprint sensor 111 function as the user identification information input section to enter the purchaser ID.

The content management server (content providing apparatus) 10 is installed by the content dealer on the Internet and controls the content (digital content data) to be offered to the user. This content management server 10 comprises a storage unit (content holding section) 10a which holds the content to be offered to the purchaser and a control unit 10b which carries out access control to the storage unit 10a. The control unit 10b achieves the interface functions to transmit and deliver the data with the network 20 and the fingerprint incorporating section 12 later discussed. In addition, to the content management server 10, a fingerprint incorporating section 12 is attached. This fingerprint incorporating section 12 incorporates (embeds) fingerprint data as the purchaser ID received by the control unit 10b in the content to be offered from the content management server 10 to the purchaser.

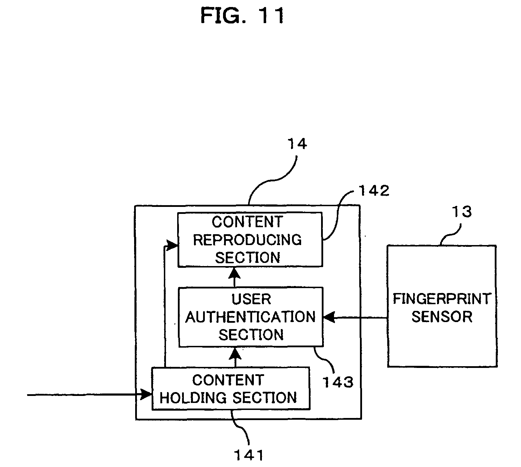

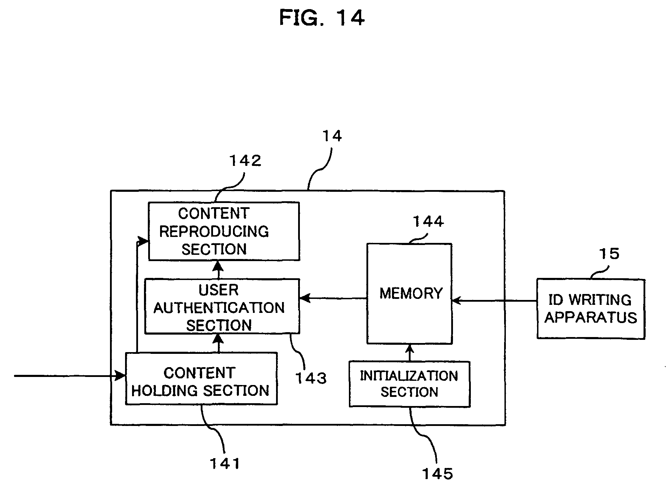

The player 14 is used when the content user uses content. This player 14 stores content received by the PC 11 via the network 20 and reproduces the content (music data). In addition, to the player 14, a fingerprint sensor (user identification information input section) 13 to read fingerprint data, as the user ID, of the user who uses content and enters into the player 14 is attached. And to the player 14, a function is provided as an authentication section which authenticates whether or not the content user is the legitimate purchaser by comparing the purchaser ID incorporated in content and the user ID entered from the fingerprint sensor 13 (see the user authentication section 143 of Fig. 11 and Fig. 14), and by this function, the content reproduction use is permitted only when the content user is authenticated as the legitimate purchaser.

In a content providing system configured as described above, there described is a procedure when the user who is both content purchase and user purchases and reproduces the music data (music composition) from the content management server 10 using the PC 11.

The user (purchaser) gains access from the PC 11 at home to the content management server 10 on the Internet. To the PC 11, a fingerprint sensor 111 to read the user fingerprint is connected, and when the user purchases a music composition in the content management server 10, the user enters the user credit card number from the PC 11 and at the same time enters his/her own fingerprint from the fingerprint sensor 111. The PC 11 transmits the user credit card number and fingerprint data and the number of music composition which the user chose to purchase to the content management server 10 through the network 20.

When the content management server 10 receives a purchase request from the PC 11, the server reads the music data for the music composition which the user chose and transmits to the fingerprint incorporating section 12, and transmits fingerprint data sent from the PC 11 to the fingerprint incorporating section 12. The fingerprint incorporating section 12 stores fingerprint data in the music data and returns the music data with fingerprint data incorporated to the content management server 10. And the content management server 10 transmits the music data with fingerprint data embedded to the PC 11 through the network 20.

When the user (purchaser) receives the music data by the PC 11, the user transfers the music data from the PC 11 to the player 14. For a method to transmit the content on the PC 11 to the player 14, USB (Universal Serial Bus) connection is popularly accepted. That is, the PC 11 and the player 14 are connected by USB and the music data on the PC 11 is downloaded onto the player 14.

To the player 14, the fingerprint sensor 13 is connected, and when the user reproduces the music composition on the player 14, the user enters fingerprint data from the fingerprint sensor 13 as the user ID. In this occasion, by making contrivances to eliminate the trouble of input of the user such as combining the fingerprint sensor 13 with the reproduction button of the player 14 or the like, user-friendliness at the time of authentication can be improved.

Thereafter, the player 14 uses the functions as the authentication section as described above, compares fingerprint data (user ID) entered from the fingerprint sensor 13 with fingerprint data (purchaser ID) in the music data, and carries out authentication. In the event that as a result of the authentication, it is judged that the user and the purchaser are the same person, the player 14 reproduces the music composition. On the other hand, in the event that the user and the purchaser are not the same person, the player 14 does not carry out reproduction.

Consequently, the content which the user purchased can be reproduced only by the apparatus which the user possesses, and any third party who has no right to use the content cannot utilize the content. By this, the right of the original copyright owner of the content can be protected. On the other hand, in the event that there are multiple players which the user owns, the user can copy content and reproduce it on other players. This copy is the reproduction for private use which is approved by the Copyright Law and the right which is granted the user. The present invention can protect the right of the content copyright owner as well as can secure the right of the user to use the content.

In the example explained as above, the content was music data but may be images (animations) such as movies, photographs (still pictures), PC software, or the like, and in all cases, the present invention is applied in the same manner as is the case of the music data described above.

[1-3] Basic configuration example and operation of the content providing apparatus (automatic content vending machine) according to the present invention

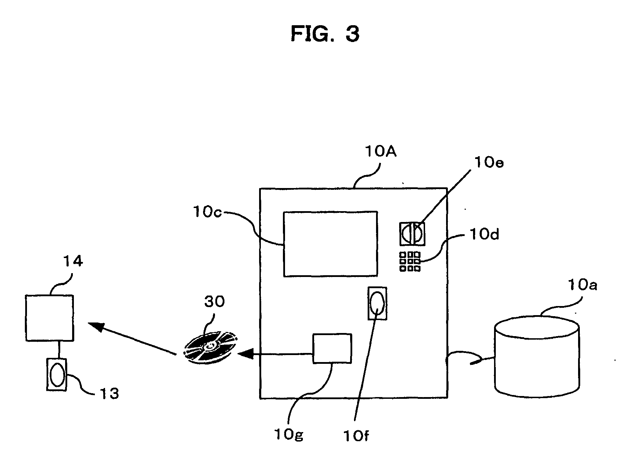

In the content providing system shown in Fig. 2, the user purchases content from content management server 10 on the network 20, and the present invention can be applied to the case in which content is purchased at shops as is the case of purchasing CDs at record shops. Fig. 3 shows a specific example for such case. Fig. 3 is a schematic view to explain a basic configuration example and operation of the content providing apparatus according to the present invention.

The automatic content vending machine (content providing apparatus) 10A shown in this Fig. 3 is installed in a store and provides content, and the user (purchaser) can purchase a desired content (music data in this case) by dropping a specified charge into the automatic content vending machine 10A.

To the automatic content vending machine 10A, a storage unit (content holding section) 10a to hold content to be provided to the purchaser, and in addition, functions as the fingerprint incorporating section (purchaser identification information incorporating section) 12 are built in, and furthermore, on the surface, a display unit 10c, operation key 10d, coin slot 10e, fingerprint sensor 10f, and medium release 10g are equipped.

In this case, the display unit 10c displays various kinds of information for the user to choose and purchase content, while the operation key 10d is operated by the user to enter directions for choosing and specifying content referring to the display unit 10c. In addition, the coin slot 10e is for the user to put the content use charge (counter value, medium purchasing charge), the fingerprint sensor (purchaser identification information input section) 10f reads the user (purchaser) fingerprint data as the purchaser ID. And by the function as the fingerprint incorporating section 12 in the automatic content vending machine 10A, fingerprint data from the fingerprint sensor 10f is incorporated in the content chosen by the user or the medium 30 that stores the content.

The medium release 10g is the place where the user takes out the medium 30 that stores the content with fingerprint data incorporated.

The content (music data) may be stored in the storage unit 10a in the automatic content vending machine 10A as shown in Fig. 3 or the automatic vending machine 10A may be connected to the network 20 (see Fig. 2) and the content may be stored in the storage unit 10a in the content management server 10 (see Fig. 2) on this network 20. In the latter case, the content specified by the purchaser is downloaded from the content management server 10 to the automatic content vending machine 10A.

In the automatic vending machine 10A configured as above, the user chooses the music composition which the user wants to purchase by operating the operation key 10d referring to the information displayed on the display unit 10c. After choosing, the user puts cash corresponding to the counter value for the use of the music composition into the coin slot 10e and enters his/her own fingerprint data from the fingerprint sensor 10f. And the automatic content vending machine 10A incorporates fingerprint data from the fingerprint sensor 10f by the function as the fingerprint incorporating section 12 into the content chosen, stores the content with fingerprint data incorporated into the medium 30, and discharges the medium 30 to the medium release 10g to offer it to the user. The user takes out the medium 30 from the medium release 10g and brings it back.

In the event the user reproduces the purchased music data by the player 14, after the user sets the medium 30 to the player 14, the same as is the case explained in Fig. 2, the user enters fingerprint data from the fingerprint sensor 13 connected to the player 14 as the user ID. And the player 14 compares fingerprint data (user ID) entered from the fingerprint sensor 13 with fingerprint data (purchaser ID) in the music data and carries out authentication by the function as the authentication apparatus. In the event that the user is judged to be the same person as the purchaser as a result of the authentication, the player 14 reproduces the music composition.

[1-4] Flow of basic processing in the content providing system according to the present invention (example 2)

In the above-mentioned player 14, the user must enter fingerprint data from the fingerprint sensor 13 every time the content is reproduced. However, the fingerprint is not entered in the player 14 at the time of content reproduction but fingerprint data as the user ID may be stored in the player 14 in advance. In such event, a memory (see reference numeral 144 in Fig. 14) to store the user ID (biometric information) is equipped in the layer 14 and by comparing the user ID in this memory with the purchaser ID in content, the user is authenticated. By this, it is possible to eliminate the trouble to enter the user ID every time the content is used and at the same time, it is no longer necessary to equip a special function (for example, fingerprint sensor) to enter the user ID into the player 14.

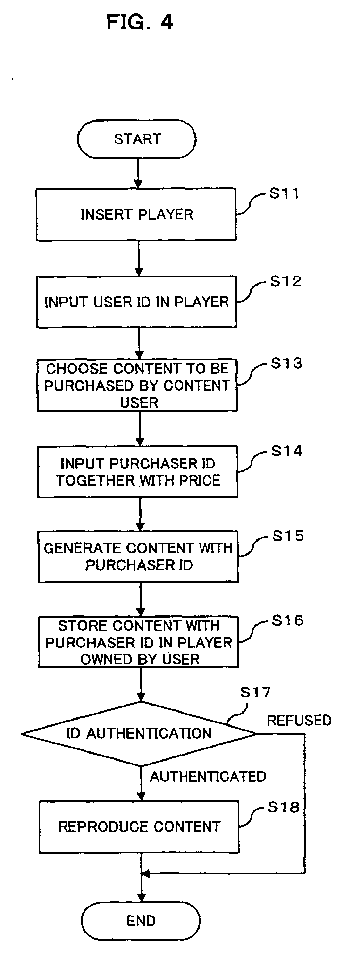

As described above, the flow of basic processing in the content providing system configured to register the user ID (fingerprint data) to the player 14 in advance (example 2) will be described in accordance with the flow chart (Steps S11 through S18) shown in Fig. 4.

In Fig. 4, Steps S11 and S12 are the procedures executed when a player is purchased, Steps S13 through S15 are the procedures executed when content is purchased, and they correspond to Steps S1 through S3 in Fig. 1, respectively. In addition, Steps S16 through S18 are the procedures executed when content is used (reproduced), and correspond to steps S4, S6, and S7 of Fig. 1, respectively.

Before purchasing content, the user purchases a player 14 as an apparatus for using and reproducing content (Step S11). In such event, the user enters and registers the user ID (for example, fingerprint data and other biometric information) for the user (content user) of the player 14 in memory of the player 14 (Step S12). In such event, a user identification information writing apparatus (see reference numeral 15 of Fig 14) for acquiring the user ID and writing and registering it to the memory is installed at the shop (sales counter)which sells the player 14 and the shop attendant may carry out registration processing of Step S12 in the shop when the user purchases the player 14. In addition, the function as the user identification information writing apparatus is equipped to the player 14 and the user him/herself who purchases the player 14 may carry out the registration processing of Step S12.

Thereafter, the procedures same as Steps S1 through S4, S6, and S7 of Fig. 1 are executed. That is, the user chooses content to purchase (Step S13), pays the counter value for the use of the content to the content manager, and notifies the purchaser ID which can identify the purchaser individual (Step S14). On the content manager side, in exchange of the counter value, the purchaser ID obtained from the purchaser is stored in the content or in a medium in which the content is stored, and then, offers the content or the medium with the purchaser ID incorporated to the purchaser (Step S15).

And the user stores the content or the medium with the purchaser ID incorporated in the player 14 (Step S16), operates the reproduction switch; then, by the function as an authentication apparatus in the player 14, the user ID registered to memory of the player 14 is automatically compared with the purchaser ID incorporated in the content or the medium, and authentication whether or not the user is the legitimate purchaser is executed (Step S17).

In the event that the user ID and the purchaser ID coincides, the user is authenticated to be the same as the purchaser ("Authentication" route of Step S17) and the content is reproduced by the player 14 (Step S18). On the other hand, in the event that the user ID does not coincide with the purchaser ID, the user is judged not to be the purchaser ("refused" route of Step S17), and the processing is ended without carrying out reproduction.

[1-5] Minutiae data as purchaser ID or user ID

For the biometric information used for purchaser ID or user ID, as described above, the fingerprint, face image, iris of the eyes, palm print, or the like are used. The data obtained by reading these pieces of biometric information by a sensor is the image data. However, in the individual authentication by fingerprints, minutiae which represent the fingerprint characteristics are extracted from the fingerprint image data, and judgment is made as to whether or not the fingerprints are the same by determining whether or not the shape, size, or relative position of the minutiae coincide.

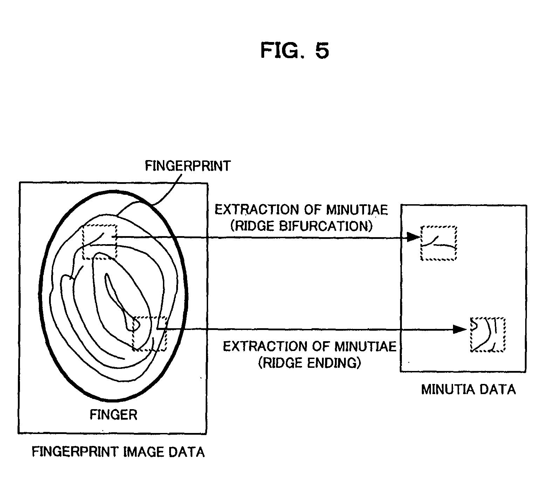

Referring now to Fig. 5, the minutiae of fingerprint data will be described.

In general, in the event that individual authentication is carried out using the biometric information, the biometric information (image data) itself is not required but as shown in Fig. 5, information concerning the minutiae (ridge bifurcation, ridge ending, or the like in the case of fingerprint data) extracted from the biometric information is required.

Then, when the biometric information as the purchaser ID is incorporated in content or when the biometric information as the user ID is registered to the player 14, a fingerprint incorporating section 12 (see Fig. 2) or the user identification information writing apparatus (see numerical reference 44 of Fig. 14) extracts minutiae necessary for authentication from the biometric information (image data of fingerprints ) , and the information concerning the minutiae may be used for purchaser ID or user ID. As shown in Fig. 5, the capacity of the fingerprint image data ranges from several kilo bytes to scores of kilo bytes, whereas the capacity of the minutiae data ranges from scores of bytes to several hundred bytes. Consequently, the data capacity of purchaser ID or user ID can be greatly reduced, the minutiae extraction processing at the time of authentication can be eliminated, and the speed of authentication processing can be increased.

[1-6] Authentication denial function at the authentication by biometric information

In general, biometric information which is different every time the user enters is entered. For example, even if the fingerprint itself is the same, the fingerprint image read by the fingerprint sensor 13 varies in accordance with the finger position and gradient, humidity, presence of sweat, pressure when the finger is pressed against the sensor surface or the like. Consequently, in the event that authentication is carried out by comparing the biometric information in content with the biometric information inside the player 14 (or biometric information collectedwhen content is used), there is no case in that these biometric information (image data, minutia data, or the like) perfectly coincide because they are collected in different periods of time.

In general, these pieces of biometric information are recognized identical when the specified coincidence conditions (for example, the conformity ratio exceeds the specified value) are satisfied. Conversely, in the event that these pieces of biometric information perfectly coincide bit by bit, there is a high possibility in that some kind of fraudulence (for example, the biometric information in content is extracted by reverse engineering and embedded in memory of the player 14 and the content is forcibly made reproducible or the like) would have been possibly done.

Therefore, in the present invention, it is configured that when the personal authentication is carried out by the biometric information, if the biometric information as the purchaser ID and the biometric information as the user ID perfectly coincide, the user is recognized not to be the legitimate purchaser (authentication refused) by the function as the authentication apparatus in the player 14, and reproduction and use of content are refused. By this, the right of the original copyright owner can be more definitely protected.

However, such a case could be thought that to the user terminal (for example, PC) which gains access to the content management server 10, the user fingerprint data is registered in advance and the data is transmitted when content is purchased. In such event, when the content purchased from the content management server 10 is reproduced on the user terminal, the two kinds of biometric information would perfectly coincide. It is not appropriate to carry out authentication denial as described above in this kind of apparatus. Therefore, the authentication denial function as described above should be incorporated in the authentication processing executed in the apparatus other than the user terminal, which uses content by copying the content from the user terminal.

[1-7] Multiple registration functions of user IDs

In general, at home, the player 14 is used by all the family members. Consequently, it is desirable to store and register the biometric information of all the family members as the users ID in memory of the player 14. When a plurality of biometric information are registered in memory of the player 14 in this way, it is configured that the authentication function in player 14 (see user authentication section 143 of Fig. 11 and Fig. 14) compares the multiple user IDs with the purchaser ID (biometric information) incorporated in content (or a medium), and if the function recognizes that the purchaser ID coincides with any one of the multiple user IDs, reproduction of content in the player 14 is allowed.

By this, for example, the content which a husband purchased can be reproduced by a wife on the player 14. This kind of use of content is the right approved for the user of the copyright products under the Copyright Law, and the present invention not only protects the right of the original copyright owner but also ensures this kind of user right.

In such event, if a large number of people are allowed to be registered to memory of the player 14, people who deviate from the use range permitted under the Copyright Law such as family members and relatives may be able to use content only by registering to memory. Therefore, it is desirable to set the number of biometric information (user ID) which can be registered to the player 14 to the number (for example, about 10 people) generally assumed the number of specific people (family, relative, or the like.) approved by the Copyright Law. In addition, in the Compensation System for Digital Private Recording provided in Copyright Law Article 30, Item 2, the compensation is added to the selling price of a recorder of digital data to restore it to the original copyright owner. Consequently, by increasing and reducing the amount of compensation in accordance with the registrable number of people to the player 14, the compensation amount to be restored to the original copyright owner may be the amount that proportionates to the number of users.

[1-8] User ID registration technique

It is desirable for each user of the player to own a user identification information writing apparatus (see reference numeral 15 of Fig. 14) but depending on the requirements such as the price of the apparatus or the like, there may be cases in which each user is unable to own one. In such event, as described in item [ 1-4 ] , it is desirable to install a user identification information writing apparatus at a shop where the player 14 is sold and when the user purchases the player 14 , the user ID is able to be written and registered to memory of the player 14 at the shop.

In such event, when the biometric information is registered as the user ID, all the members (for example, all the family members) who may possibly use the player must go to the shop when the player 14 is purchased and the biometric information must be collected from all the people concerned. However, this kind of registration method is extremely troublesome for the purchase of the player 14.

Therefore, when the biometric information of multiple users is registered to the player 14, the purchaser of the player 14 may prepare a storage medium in which the biometric information of the multiple users is stored in advance, for example, an IC card, and bring this IC card to the sales counter of the shop when the player 14 is purchased, and the IC card is inserted into the IC card reader installed at the sales counter, and a plurality of biometric information read from the IC card by the IC card reader may be registered to the player 14. By this, the biometric information of the all the family members can be stored and registered to the player 14, even if all the family members are not reported to the shop at the time of purchasing the player.

[1-9] Initialization function of user ID

On the other hand, the user may sell the apparatus such as a player to any third party. Players of recent years have a recording medium inside and of those, there are players which can have copied content inside (for example, harddisk built-in type car navigation system or the like). In such players, the copied content is sold when the player is sold to the third party. Because selling the copied content inside the apparatus violates the Copyright Law, the user is unable to sell the player which has the copied content. However, when the player 14 which authenticates by comparing the content purchaser ID with the user ID registered in memory is sold to any third party with the content and user ID held, the third party who is not the legitimate purchaser can easily reproduce the content in the player 14.

Therefore, in the present invention, an initialization section (see reference numeral 145 of Fig. 14) which initializes and deletes the user ID (biometric information) written and registered to memory (see reference numeral 144 of Fig. 14) of the player 14 is equipped to the player 14. When the player 14 is sold or transferred to any third party, using the initialization section, the content stored in the player 14 cannot be reproduced or used in the player 14 by deleting the user ID in memory (biometric information). By this, the player 14 can be sold without violating the Copyright Law. Needless to say, the content itself may be deleted, but the original copyright owner and content dealer would have better chance of business as described later if the content is not deleted.

[1-10]Trial use enabling function of content

As described before, in recent years, by the advent of Napstar (registered trademark), Gnutella (registered trademark), or other data exchange software (file sharing software), the content data can be easily exchanged between users. These pieces of data exchange software are software which enables sharing of files in PC which the user possesses without using a server, and there are not a few cases in which contents having music data, PC applications, and other intelligent property rights are shared by these kinds of software. Sharing of these contents is frequently practiced without prior consent of the original copyright owner, and is an illegal act under the Copyright Law.

However, the data exchange software as described above has the following features (a) and (b):

(a) Once the content is disclosed to the public, the content manager can distribute the content to the market without spending money for server maintenance management or the like; and

(b) Because the Internet is a passive type network, the content selling business on the Internet cannot be initiated unless the content manager sells the content, the server address (URL: Uniform Resource Locator), or the like of the server who sells the content is notified to the user and access is received from users. However, because in the data exchange software, it is possible for a user to search a file which is located at "somewhere" of another user with whom the data (file) is shared, the user is able to obtain the desired file without knowing the information of the content manager.

The data exchange software which has the above-mentioned features (a) and (b) is extremely useful software if the condition in which the copyright is illegally violated can be solved.

However, because in the present invention described above, the content offered to the user can be used only by the apparatus (player 14) which the user possesses, even if the content is distributed to any third party by the data exchange software, the third party cannot use the content. However, under such circumstances, the content becomes worthless for the third party and there is no meaning to share the file (exchange data) for the content.

Therefore, in the present invention, trial use information that prescribes the content trial use allowable range is added in advance to the content and even when the content user is recognized not to be a legitimate purchaser by the authentication function (see the user authentication section 143 of Fig. 11 or Fig. 14) in the player 14, the use of the content at the player 14 is permitted within the range that conforms to the trial use information.

The trial use information prescribes the trial use allowable range of the content as described above, and the trial use allowable range is defined as the conditions to allow the content trial use. For specific conditions, restriction to the number of times such as "3 times for previewing" or restriction to reproduction such as "first 10 seconds for previewing" or the like can be considered.

And if the player 14 fails to authenticate the biometric information in content as the biometric information in the player 14, the player 14 regards the latest use as "trial use" and carries out "trial use reproduction. " If the trial use condition is the restriction to the number of use, the player 14 subtracts the number of times for trial use stored in content by one every time the content is trially used and prohibits reproduction after the number of times for trial use reaches zero. In addition, when the trial use condition is restriction to reproduction, the player 14 suspends reproduction after the trial-use allowable time is passed.

By this, even if the content user is not a legitimate purchaser of the content, the content can be "trially used." As a result of trial use, if the user hopes to officially purchase the content, the user will access the content management server 10 and go through procedure of official purchase.

In such event, as described above, since the Internet is a passive type network, in order for the person interested in purchase to go through procedure of officially purchasing content, the person must know the address (URL) of the content management server 10, content purchasing method, or the like.

Therefore, in order to enable the person who wants to purchase the content as a result of trial use to immediately purchase the content, in the present invention, information concerning the procedure to receive the content from the content management server 10 (that is, the licensing procedure) is added or stored in content in advance.

By this, even the person interested in purchasing the content who has never used the content management server 10 can immediately purchase the content. Consequently, distribution by the data exchange software has a role to introduce content to any third party and can bring about expanded business chances to the content manager or copyright owner. In addition, the user of the data exchange software can rightfully use the content within the range of trial use without violating the Copyright Law.

[1-11] Flow of basic processing in the content providing system according to the present invention (example 3)

As described in item [1-10], even if the user has possessed content by the data exchange software (file sharing software), the user can use the content only within the trial use range unless the purchaser ID incorporated in the content is of the user him/herself. Consequently, the above-mentioned user must access the content management server 10 anew and purchase the content in order to officially utilize the content even if the user possesses the content.

Therefore, the user may be allowed to officially use the content not by purchasing the content newly but by rewriting the purchaser ID (biometric information) in the content which the user already possesses to the biometric information of the user.

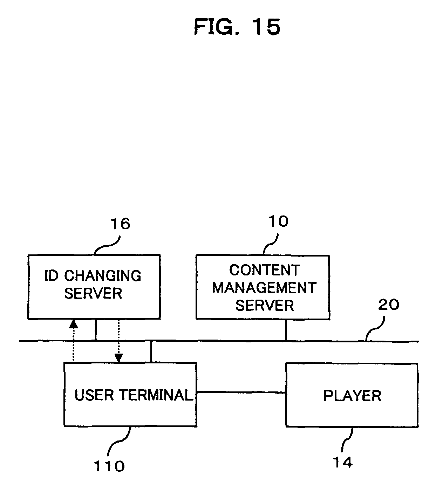

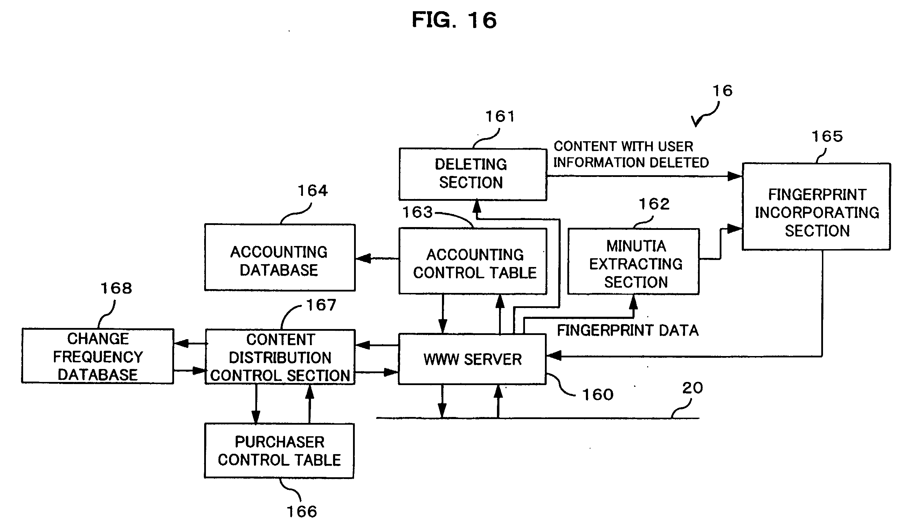

In such event, the content manager (content right owner, original copyright owner) has a purchaser identification information changing section (see ID changing server 16 of Fig. 15 and Fig. 16) that changes the purchaser ID (biometric information) already incorporated in content or a media to other purchaser ID (biometric information), and when the content owner is not a legitimate purchaser, the content manager changes the purchaser ID already incorporated in content or a medium by the purchaser identification information changing section to ID (biometric information) which can identify the owner individual in exchange of the counter value paid by the owner and provides the owner with the content after the purchaser ID is changed.

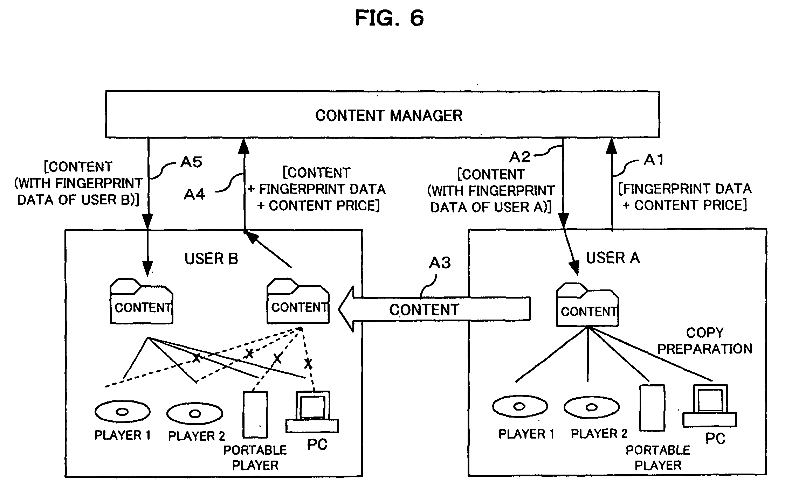

The flow of basic processing in the content providing system configured to carry out purchaser ID change processing as described above (example 3) will be described referring to Fig. 6.

User A (original legitimate purchaser) pays the counter value to the content manager in compliance with the procedure explained by Fig. 1 or Fig. 4 and purchases content with fingerprint data of user A incorporated (see arrow marks A1, A2 of Fig. 6). For the content purchased in this way, user A can freely copy the content and can use the copied content in various kinds of equipment (PC, portable player, player 1, player 2 in Fig. 6) which user A possesses.

Assume that user B (third party) acquires the content (with fingerprint data of user A incorporated) which user A possesses by the use of, for example, data exchange software or the like (see arrow mark A3 of Fig. 6). In such event, the biometric information in the content (fingerprint data in Fig. 6) differs from the biometric information of the equipment which user B possesses, and the content cannot be officially used on the equipment of user B.

If user B hopes to officially use the content, user B transmits the content, content charge (specified use charge), and user B biometric information (fingerprint data) to the content manager (see arrowmark A4 of Fig. 6). And the content manager changes the biometric information (fingerprint data of user A) in the content to that of user B by the purchaser identification information changing section and sends the content to the user (see arrow mark A5 of Fig. 6).

By this, user B can officially use the content as a legitimate purchaser of content. On the other hand, the content manager can collect the content use charge not only from the user who officially purchased the content from the content right owner but also even from the user who acquired the content by the data exchange software or the like. In addition, the user can legally acquire content by the use of data exchange software.

When this kind of content providing system is used, the content manager no longer needs to continue holding the content. That is, the content manager can officially provide the content to the user who acquired an old content by the use of data exchange software by collecting the content use charge as described above and rewriting the purchaser ID in the content even if old contents (for example, music compositions one or more years before) are deleted from the content management server 10. In the example shown in Fig. 6, the dealer who first sold content to user A is the same as the dealer who changed the purchaser ID (biometric information) in the content and provided the content to user B, but different dealers may handle the content selling service and purchaser ID changing service. If the purchaser ID in content (biometric information) is standardized in the industry, a dedicated agent (for example, an organization such as JASRAC in the music industry) can change the user of content.

User A who is the original legitimate purchaser of content has promoted the sales of the content and brought profits to the content manager. Therefore, the content manager may hold the purchaser ID of user A who sold the content, the content distribution control section counts the degree of contributing to the sales as described above as the number of changes of purchaser ID (number of distribution times), and pay the counter value (for example, discount tickets for purchasing content) to user A in accordance with the count results. The configuration to achieve this kind of function will be discussed later referring to Fig. 16.

[1-12] Flow of basic processing in the content providing system according to the present invention (example 4)

When the biometric information is simply added as purchaser ID in content, content may be reproduced if the biometric information in the content is removed or the biometric information is ignored without using it for authentication. That is, in the event that the content format and a method for storing the biometric information in content are known, forming a program on PC in accordance with the information enables illegal reproduction of content by removing the biometric information or ignoring the biometric information as described above.

Therefore, it is desirable to encrypt content using the biometric information and refuse reproduction of the content should the biometric information attached to content be rewritten.

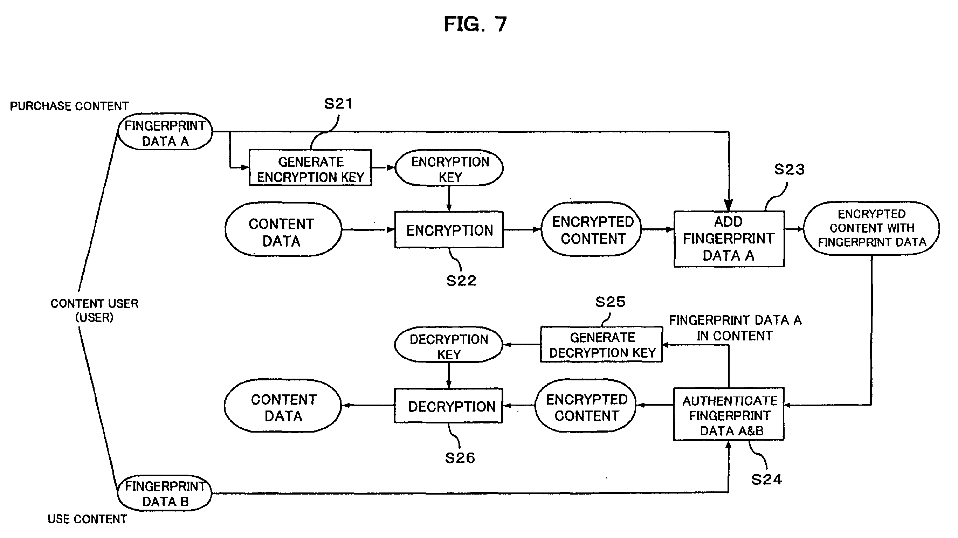

Referring now to Fig. 7, the flow of basic processing in the content providing system configured to carry out encryption of content as described above (example 4) will be describe as follows.

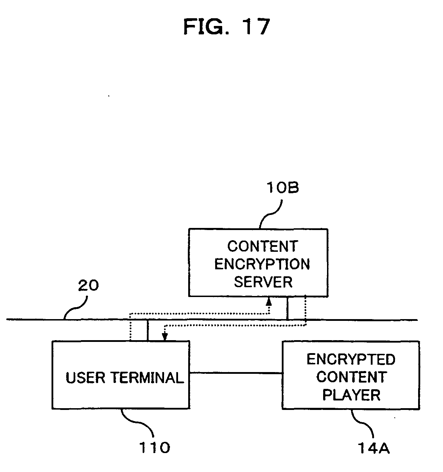

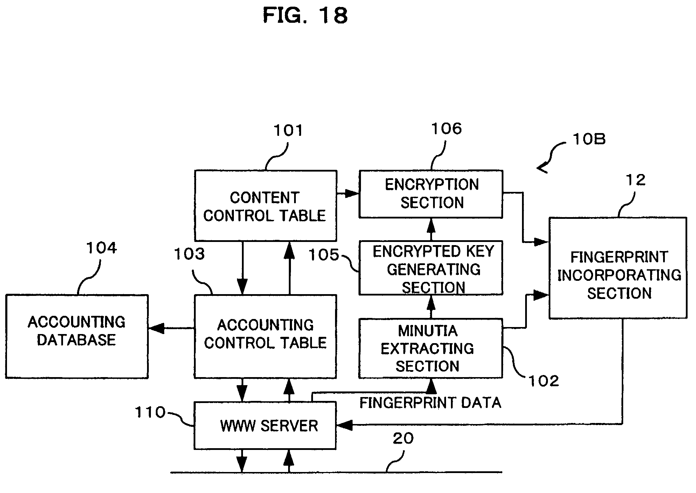

The content manager (content encryption server: see reference numeral 10B of Fig. 17 and Fig. 18) generates an encryption key (see Step S21 of Fig. 7) on the basis of fingerprint data A (purchaser ID) which the user (content user) entered at the time of purchase, and using the encryption key, encrypts the content data to generate the encrypted content (see Step S22 of Fig. 7), and adds fingerprint data A to the encrypted content and generates the encrypted content with fingerprint data (see Step S23 of Fig. 7), and provides this encrypted content with fingerprint data to the user.

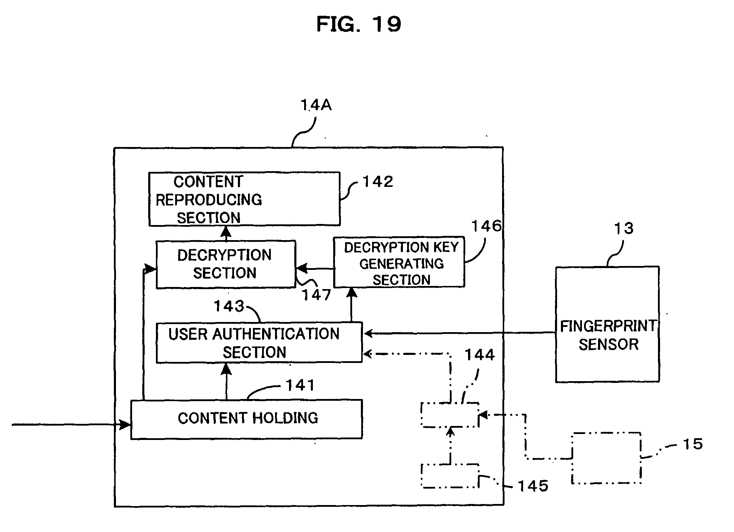

When the user reproduces the encrypted content with fingerprint data attached on a player (encrypted content player: see reference numeral 14A of Fig. 17 and Fig. 19), the player authenticates by comparing fingerprint data B entered by the user when content is used or fingerprint data B of the user registered in advance in the player with fingerprint data A added to the encrypted content (see Step S24 of Fig. 7).

In the event that these fingerprint data A, B are authenticated to be of the same person (that is, when the content user is authenticated to be the same as a legitimate purchaser), the player generates a decryption key using fingerprint data A (purchaser ID) attached to the encrypted content (see Step S25 of Fig. 7). And the player decrypts the encrypted content by the use of the decryption key generated and obtains the original content data (see Step S26 of Fig. 7), and reproduces the content data.

By providing the encrypted content using fingerprint data (purchaser ID) in this way, even if any evil-minded third party tampers fingerprint data in content into his/her fingerprint data, the third party can be subject to authentication of fingerprint data but since fingerprint data that generates the decryption key differs from the original fingerprint data, the third party cannot decrypt the encrypted content to the original content, and the third party cannot use the content. Consequently, even if the purchaser ID (biometric information) stored in the content is rewritten, it is able to definitely prevent the content from being used on a player of a user who is not the legitimate user.

[2] More specific embodiments of the present invention

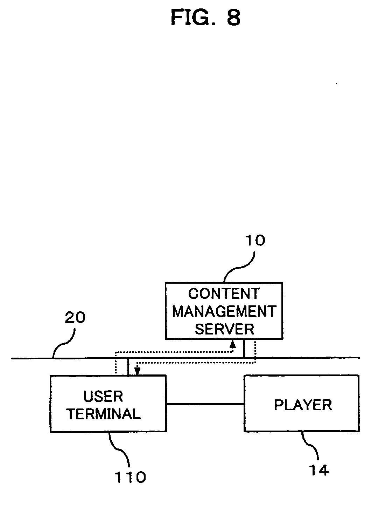

Referring now to Fig. 8 through Fig. 19, description will be made on more specific embodiments achieved by combining the basic processing and configurations of the present invention described above in Item [1].

In the following embodiments, the same as Item [1] , cases in which fingerprint data is used for the biometric information (purchaser ID, user ID) and music data (music composition) is handled for content will be discussed. For biometric information, in addition to fingerprint data, iris of eyes, palm prints, face image, signature, or the like may be used. In addition, examples of content include photographs (still picture), movies (animation), software of PC, or the like in addition to music data (music composition ) , and all of them can applicable to the following embodiments.

[2-1] First embodiment

The content providing system as the first embodiment according to the present invention corresponds to systems and functions discussed in items [1-1], [1-2], [1-5] and [1-6] , and this first embodiment will be described referring to Fig. 8 through Fig. 13.

Fig. 8 is a block diagram that indicates a configuration of content providing system as the first embodiment according to the present invention, and as shown in Fig. 8, the content providing system of the first embodiment provides content to a purchaser who has paid the counter value for the use of the content, and comprises a content management server 10, user terminal 110, player 14, and network 20. In Fig. 8, too, the same as the example shown in Fig. 2, the case in which the user who is both purchaser and user of content uses the user terminal 110 and purchases music data (music composition) from the content management server 10 which the content dealer (content manager) installed on the Internet is shown.

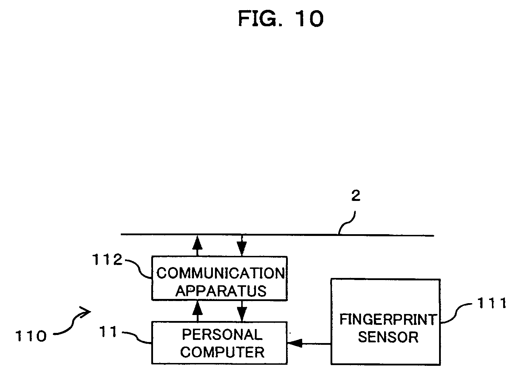

In this case, the user terminal 110 and player 14 are possessed by the user at home, and the user terminal 110 comprises PC 11, fingerprint sensor 111, and communication apparatus 112 as shown in Fig. 10. Fig. 10 is a block diagram that shows the configuration of user terminal 110 in the first embodiment.

The PC 11 is communicably connected to the content management server 10 via the communication apparatus 112 and the network 20, and in addition, to this PC 11, the fingerprint sensor 111 is attached, and fingerprint data of the user (purchaser) read by this fingerprint sensor 111 is notified to the content management server 10 as the purchaser ID via the PC 11, communication apparatus 112 and network 20. That is, the user terminal 110 including these PC 11, fingerprint sensor 111 and communication apparatus 112 functions as a purchaser identification information input apparatus for entering the purchaser ID.

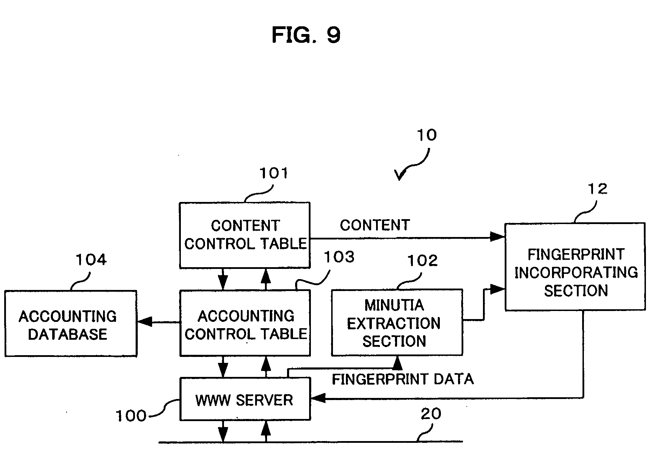

The content management server (content providing apparatus) 10 is installed on the Internet by the content dealer as described above, and controls the content (digital content data) to be presented to the purchaser, and as shown in Fig. 9, comprises a WWW server 100, content control table 101, minutiae extraction section 102, accounting control table 103, accounting database 104, and fingerprint incorporating section 12. Fig. 9 is a block diagram that indicates a configuration of content management server 10 in the first embodiment. In addition, in the present embodiment, a fingerprint incorporating section 12 externally mounted to the content management server 10 in Fig. 2 is included in the content management server 10 as the fingerprint incorporating section 12.

The WWW server 100 is an interface to carry out communication with a user terminal 110 via the network 20. This WWW server 100 carries out a function to notify a content table which the content management server 10 possesses, the charge of each content in the content management server 10, procedures when the user (person who hopes to purchase) purchases content (entry procedure of credit card information or the like) or the like to the user terminal 110.

The content control table 101 functions as a content holding section that holds content to be provided to the purchaser, and the minutia extraction section 102 extracts minutiae from fingerprint data received by the WWW server 100. The accounting control table 103 controls the content purchase procedures (price, settlement method, or the like) and the user content purchase condition, and the accounting database 104 has the user content purchase history registered by the accounting control table 103 and stores.

The fingerprint incorporating section (purchase identification information incorporating section) 12 incorporates minutia data extracted by the minutia extraction section 102 in the content (or a media which stores the relevant content) to be presented to the purchaser as the purchaser ID. The content with the purchaser ID incorporated by this fingerprint incorporating section 12 is transmitted to the user terminal 110 through the WWW server 100 and the network 20.

The player (equipment, content reproducing apparatus) 14 is used when the content user uses the content the same as that shown in Fig. 2, and has the content received by the PC 11 from the content management server 10 via the network 20 stored and reproduces the content (music data).

This player 14 comprises a content holding section 141, content reproducing section 142, and user authentication section 143 as shown in Fig. 11, with the fingerprint sensor 13 attached. Fig. 11 is a block diagram that indicates a configuration of the player 14 in the first embodiment.

The fingerprint sensor (user identification information input apparatus) 13 reads fingerprint data of the user who uses the content as the user ID and enters it in the player 14.

The content holding section 141 holds the content subject to reproduction purchased by the user terminal 11 and the content reproducing section 142 reproduces the content held in the content holding section 141 in accordance with the authentication result of the user authentication section 143.

The user authentication section (authentication apparatus, authentication section) 143 first extracts the minutia data from fingerprint data entered from the fingerprint sensor 13 as the user ID, and then, authenticates whether or not the content user is a legitimate purchaser by comparing the extracted minutia data (fingerprint data) with the minutia data (purchaser ID) incorporated in the content. And it is configured to enable reproduction of the content by the content reproducing section 142 only when the content user is authenticated as the legitimate purchaser by the user authentication section 143.

In the first embodiment, it is configured to recognize that the content user is not the legitimate purchaser in the event the minutia data as the purchaser ID completely coincides with the minutia data as the user ID, as a result of the comparison in the user authentication section 143 and to refuse the content reproduction.

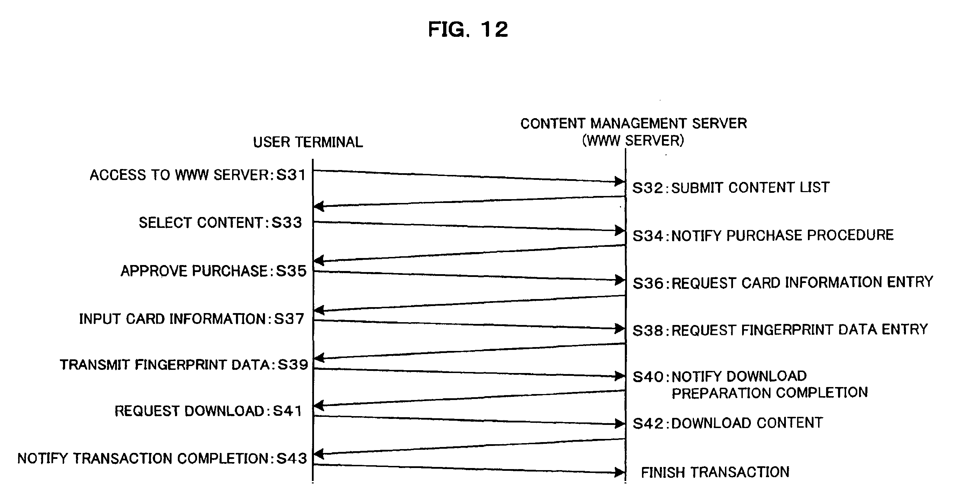

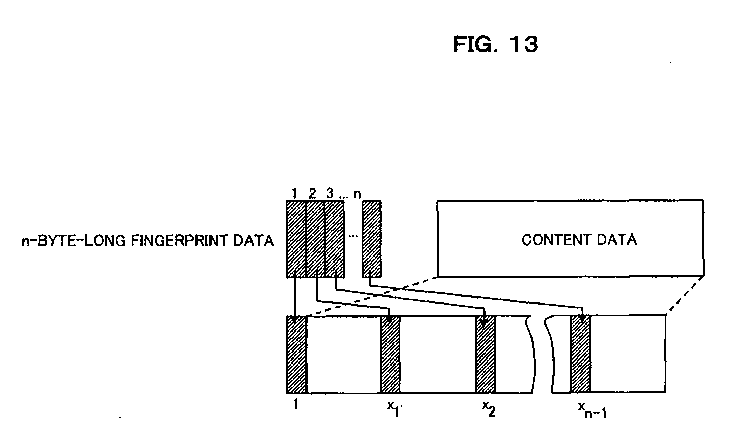

Next discussed is the procedure for the user to purchase content and reproduce it in the content providing system according to the first embodiment configured as described above, referring to Fig. 12 and Fig. 13. Fig. 12 is a communication sequence diagram between the user terminal 110 and the content management server 10 (WWW server 100) in the first embodiment, while Fig. 13 is a diagram that explains fingerprint data storing technique (operation of the fingerprint incorporating section 12) in content in the first embodiment.

When the user purchases content, in the first place, the user accesses the content management server 10 (WWW server 100) from the user terminal 110 which the user possesses via the network 20 (see S31 of Fig. 12). The WWW server 100 responds to access from the user terminal 110 and sends back a table of contents in the content control table 101 to the user terminal 110 (see S32 of Fig. 12).

The user refers to the content table on the user terminal 110 (PC 11), chooses content desired to purchase, and transmits the content No. to the content management server 10 (see S33 of Fig. 12). When the WWW server 100 receives the content No. , it refers to the purchase procedures (price, settlement method, or the like) that support the number on the accounting control table 103, and notifies the content to the user terminal 110 (see S34 of Fig. 12). In this event, examples of the settlement method include settlement by credit card, bank transfer, postal transfer, a postal note of a fixed amount, cash remittance, or the like, but in this case, description will be made with the settlement by credit card used as an example.

The user decides whether or not to purchase the content from the purchase procedures displayed on the user terminal 110. When the user approves to purchase the content, the effect is transmitted to the content management server 10 (see S35 of Fig. 12). When the WWW server 100 receives the purchase approval notice from the user terminal 110, the WWW server 100 transmits a request for entering credit card information (kind of card, card No., expiration date, or the like) necessary for carrying out credit card settlement to the user terminal 110 (see S36 of Fig. 12).

The user enters the credit card information and transmits to the WWW server 100 at the request of entering the credit card information (see S37 of Fig. 12). The WWW server 100 transmits the credit card information transmitted from the user terminal 110 to the accounting control table 103 and the accounting control table 103 stores the content purchase history in the accounting database 104. Later, the content manager collects the content use charge (counter value) from the user through the credit card company.

Then, the WWW server 100 requests the user terminal 110 to transmit fingerprint data (see S38 of Fig. 12). The user enters fingerprint data from the fingerprint sensor 111 in conformity to the announcement of the WWW server 100 and transmits to the WWW server 100 (see S39 of Fig. 12).

The WWW server 100 sends the transmitted fingerprint data to the minutia extraction section 102, and in this minutia extraction section 102, the minutia data is extracted from fingerprint data.

And in the fingerprint incorporating section 12, the minutia data from the minutia extraction section 102 is incorporated in the content which the user hopes to purchase as the purchaser ID (biometric information).

In such event, the minutia data may be added to the content as the header information but because there is a high possibility for the evil-minded third party to tamper fingerprint data when the addition position is fixed, specifically, for example, as shown in Fig. 13, the n-byte-long fingerprint data is incorporated in the content data. In the example shown in this Fig. 13, based on the 1-byte fingerprint data f(x) (x is a storage address in the content) and the content data before and after it f(x-1) and f(x+1), the next storage address is calculated by the hash function F(x-1, x, x+1). Let 1, x1, x2, ... , xn-1 denote the first byte, second byte, third byte, ..., nth byte data storage address in the n-byte-long fingerprint data, respectively, we have:

$$F(0,1,2)=x1$$

$$F((x1)-1,x1,(x1)+1)=x2$$

$$F((x2)-1,x2,(x2)+1)=x3$$

$$:$$

$$F((xn-2)-1,xn2,(xn-2)+1)=xn-1$$

In this event, for the hash function F(a, b, c) , for example, the following equation is used.

$$F(a, b, c) = b + a(+)b(+)c$$

where, (+) is an exclusive OR.

In this way, by dividing fingerprint data by increments of one byte and incorporating them by constellating them in the content, tampering of fingerprint data becomes still more difficult.

When storing of fingerprint data in the content is completed as described above, the WWW server 100 notifies the user terminal 110 to the effect that the content is ready to be transmitted (see S40 of Fig. 12) . The user who received this notice sends a file transfer request (download request) to the WWW server 100 (see S41 of Fig. 12), and the WWW server 100 transmits the content with fingerprint data stored to the user terminal 110 when it receives the transfer request (see S42 of Fig. 12). The user terminal 110 transmits a notice of completion of transaction to the WWW server 100 after downloading is finished (see S43 of Fig. 12). When the transaction completion notice is received by the WWW server 100, the purchase transaction of this content is finished.

Thereafter, when the user uses the content, the content itself is stored in the player 14 or the content copy is stored in the player 14. The content stored in the player 14 is held in the content holding section 141. And the user enters the user fingerprint data from the fingerprint sensor 13.

In the player 14, the minutia data are extracted as the user ID from fingerprint data entered from the fingerprint sensor 13, and at the user authentication section 143, the extracted user ID is compared with the purchaser ID (minutia data) incorporated in the content, and authentication whether or not the content user is a normal purchaser is carried out. When the content user is authenticated to be the same as the legitimate purchaser by the user authentication section 143, content reproduction by the content reproducing section 142 is permitted, and the content held in the content holding section 141 is reproduced (performed) by the content reproducing section 142.

Because it is quite troublesome for the user to enter fingerprint data every time the content is used, it is preferable to incorporate the fingerprint sensor 13 at the position where the user is sure to have his/her fingers touched at the time of reproduction. Specifically, the fingerprint sensor 13 is arranged on the "reproduction button" of the player 14. In addition, in the event that a plurality of contents are stored in the player 14, it is configured not to request the entry of fingerprint for each content but to hold fingerprint data first entered on the storage apparatus of the player 14, and thereafter, carry out authentication using fingerprint data on the storage apparatus as the user ID until the power supply of the player 14 is turned off so that the user labor could be saved. By configuring in this way, the user can enter fingerprint data without particularly being aware of when the content is reproduced on the player 14, and furthermore, the contents thereafter can be authenticated only by entering fingerprint data once.

By using the content providing system according to the first embodiment as described above, duplication can be prepared in the range in which the user uses by him/herself for the content which the user purchased, and at the same time can use the content on a plurality of equipment which the user have. On the other hand, since the content cannot be used by any other person than the user who officially purchased the content, and the original copyright owner can be definitely protected.

In this way, according to the content providing system as the first embodiment of the present invention, when the purchaser pays the counter value (content use charge) to the content manager to purchase content, in the content management server 10, the user ID (fingerprint data) that can identify the purchaser individual is incorporated in the content (or a medium), and the content (or a medium) is provided to the purchaser. And only when the content user is authenticated to be the same as the legitimate purchaser by the use of the purchaser ID, the use of the content is allowed. By this, the use of digital content such as music or images, or applications or the like that run on the PC 11 can be allowed only for the purchaser who officially paid the content use charge and purchased the content, and while thoroughly protecting the original copyright owner right, execution of the operations (reproduction, copying, or the like) which are allowed under the Copyright Law can be ensured for the legitimate purchasers, and the right of the purchaser can be secured.

That is, because the purchaser ID (fingerprint data) is incorporated in the copied content, as long as the user is the legitimate purchaser, the user can use the copied content but because the people other than the legitimate purchaser are not authenticated to be the same as the legitimate purchasers, they cannot use the copied content. Consequently, if anyone other than the legitimate purchaser wants to use the copied content, she/he must pay the content use charge, and therefore, the content use charge can be collected from users of copied content, from whom the content use charge has never been collected before, and the right of the original copyright owner can be definitely protected.

Using the biometric information (in this case, minutia data extracted from fingerprint data) as the purchaser ID or user ID, illicit use of any third party who has no right to use the content can be definitely prevented.

However, the purchaser biometric information cannot coincide completely with the user biometric information even if they are of the same person, if they were collected at different periods of time. Consequently, in the event that the user authentication section 143 recognizes that the purchaser biometric information completely coincides with the user biometric information, conversely, there is a high possibility that some kind of illegality takes place, and in such event, by configuring to recognize the user not a legitimate purchaser and to refuse the use of the content, the right of the original copyright owner can be more definitely protected.

In addition, using minutia data extracted from fingerprint data (biometric information) as the purchaser ID or user ID can greatly reduce the data capacity of purchaser ID and user ID as compared to the case in which fingerprint data (biometric information) itself is used.

In addition, to the content providing system of the first embodiment described above, a trial use enabling function of the content explained in Item [1-10] may be further provided. That is, to the content, trial-use information (number of trial-use enabling times, trial-use allowable time, or the like) that specifies the content trial use allowable range is added, and even when the content user is recognized as not a legitimate purchaser by the user authentication section 143, it is configured to permit the content reproduction by the player 14 (content reproducing section 142) within the range that conforms to the trial-use information. By this, even for the user who failed for authentication, the use of the content can be permitted within the specified trial-use allowable range. Consequently, even a user who is not a legitimate purchaser can use content trially. If the user hopes to officially purchase content as a result of the trial use, the user goes through procedure to the content management server 10.

Consequently, by equipping the trial-use enabling function as described above, distribution by the data exchange software will play a role to introduce the content to the third party, bringing about the expanded business chances to the content manager and copyright owner. In addition, the user of the data exchange software can legally use the content within the trial use range without violating the Copyright Law.

In such event, by adding to the content the information concerning the procedure to receive provision of content (procedure to be licensed) from the content management server 10, even a user who has never used the content management server 10 can purchase officially and immediately the content from the content management server 10 by referring to the information.

[2-2] Second embodiment

The content providing system as the second embodiment of the present invention support the systems and functions described in item [1-4] and [1-7] through [1-9]. Because the content providing system of the second embodiment is configured in the same manner as the first embodiment except the configuration of the player 14, the description is made on the configuration of the player 14 only referring to Fig. 14. Fig. 14 is a block diagram that indicates a player 14 in the second embodiment according to the present invention.

The player 14 in the second embodiment is formed with memory 144 and an initialization section 145 further equipped in addition to a content holding section 141, content reproducing section 142, and user authentication section 143, the same as the first embodiment as shown in Fig. 14.

To this player 14, an ID writing apparatus (user identification information writing apparatus) 15 is connected by USB. This ID writing apparatus 15 acquires fingerprint data from the person who wants to use content on the player 14, extracts minutia data from fingerprint data as the user ID, and writes and registers the minutia data (user ID) in memory 144 of the player 14. The ID writing apparatus 15 may be owned by the owner of the player 14 as described before or may be installed at the sales counter or the like of a shop where the player 14 is sold.

The memory (user identification information storage section) 144 in the player 14 has the user of player 14 written in advance by the ID writing apparatus 15 as described above and holds it. For this memory 144, for example, FRAM (Ferroelectoric Random Access Memory) is used. FRAM is a read/write memory and the same as the flash memory used for digital cameras or the like, it is a non-volatile memory that holds data stored when power is turned off. However, FRAM has features of being able to write and read data noncontactly (requiring no terminal for connecting to reader/writer) and of requiring no power supply. Because FRAM requires no terminal and no power supply in this way, the use of FRAM can lower the cost of whole apparatus as compared to the case with flash memory used.

And in the second embodiment, the user authentication section 143 authenticates whether or not the content user is a legitimate purchaser by comparing the minutia data (user ID) registered to memory 144 and the minutia data (purchaser ID) incorporated in content when content is reproduced. And it is configured to allow content reproduction by the content reproducing section 142 only when it is authenticated that the content user is the legitimate purchaser by the user authentication section 143.

In addition, in the second embodiment, the minutia data for multiple users (for example, all the family members who use the player 14) may be written and registered to memory 144 as the user ID by the ID writing apparatus 15. In such case, the user authentication section 143 compares the minutia data (purchaser ID) in content with multiple minutia data (user ID) in memory 144 and allows content regeneration when the purchaser ID coincides with any one of the multiple user IDs.

The initialization section (initialization apparatus) 145 initializes and deletes theminutia data (user ID) written and registered to memory 144.

In the content providing system (player 14) of the second embodiment configured as described above, the owner of the player 14 can save labor for entering fingerprint data when content is reproduced by registering his/her own fingerprint data (minutia data) in advance as user ID to memory 144 of the player 14 using the ID writing apparatus 15, and in addition, there is no need to equip a fingerprint sensor to the player 14, achieving downsizing and cost reduction of the player 14.

In addition, when the ID writing apparatus 15 is standardized, it can be shared in, for example, CD players, headphone stereos, VTRs, DVDs, and other various kinds of content reproducing apparatus.

Furthermore, because registering the minutia data extracted from fingerprint data (biometric information) to memory 144 as user ID can not only greatly reduce the data capacity of user ID as compared to the case in which fingerprint data itself is registered but also can eliminate a need of carrying out minutia extraction processing at the time of authentication at the user authentication section 143, speed of authentication processing can be increased.

In addition, as described above, by carrying out authentication by comparing multiple user IDs registered to memory 144 with the content purchaser ID, it becomes possible, for example, for a wife to use content which a husband purchased. This kind of use is the right approved for the purchaser of copyright products under the Copyright Law, and the right of original copyright owner can be protected and at the same time, the right for the purchaser can be ensured.

Furthermore, by equipping the initialization section 145 that initializes and deletes user ID in memory 144 to the player 14, user ID in memory 144 can be deleted by the use of the initialization section 145 when the player 14 is sold to any third party. Consequently, should any content remain in the player 144 (content holding section 141), the third party cannot use the content and the right of the original copyright owner can be protected.

[2-3] Third embodiment

The content providing system as the third embodiment according to the present invention corresponds to the system explained in item [1-11], and referring now to Fig. 15 and Fig. 16, the third embodiment will be described.

Fig. 15 is a block diagram that indicates a configuration of a content providing system as the third embodiment of the present invention, and as shown in Fig. 15, the content providing system of the third embodiment is configured with an ID changing server (purchaser identification information changing apparatus) 16 newly equipped in addition to the content management server 10, user terminal 110, player 14, and network 20 the same as the first embodiment or the second embodiment. This ID changing server 16 is installed on the network 20 and is configured to enable communication between this user terminal 110 and network 20 in response to access from the user terminal 110.

The ID changing server 16 changes the purchaser ID (fingerprint data/minutia data) already incorporated in content (medium) to other purchaser ID (fingerprint data/minutia data), and in the event that the content owner is not a legitimate purchaser, this ID changing server 16 changes the purchaser ID already incorporated in content to ID (fingerprint data/minutia data) that can identify the owner individual in exchange of the counter value paid by the owner.

To achieve this kind of function, the ID changing server 16 comprises a WWW server 160, purchaser ID deleting section 161, minutia extracting section 162, accounting control table 163, accounting database 164, fingerprint incorporating section 165, purchaser control table 166, content distribution control section 167, and change frequency database 168 as shown in Fig. 16. Fig. 16 is a block diagram that indicates a configuration of the ID changing server in the third embodiment. In addition, the WWW server 160, minutia extracting section 162, accounting control table 163, accounting database 164, and fingerprint incorporating section 165 function in the same manner as the WWW server 100, minutia extracting section 102, accounting control table 103, and accounting database 104, and fingerprint incorporating section 12 in the first embodiment.

The WWW server 160 is an interface that communicates with the user terminal 110 via the network 20.

The purchaser ID deleting section 161 deletes the purchaser ID from content with the purchaser ID written which is received by the WWW server 160 and transmits content with the purchaser ID deleted (that is, content only) to the fingerprint incorporating section 165.

The minutia extracting section 162 extracts minutiae from fingerprint data received at the WWW server 160, and the accounting control table 163 controls purchaser ID changing procedure (price, settlement method, or the like) and the accounting condition for changes in purchaser ID, and the accounting database 164 stores the content use charge accounting history in accordance with changes of purchaser ID, which is registered by the accounting control table 163.

The fingerprint incorporating section 165 incorporates the minutia data extracted by the minutia extracting section 162 in content with purchaser ID deleted from the purchase ID deleting section 161 as purchaser ID, similarly to the fingerprint incorporating section 12 of the first embodiment. The content with purchaser ID incorporated by the fingerprint incorporating section 165 is transmitted to the user terminal 110 which requested change of purchaser ID through the WWW server 160 and network 20.

In addition, the purchaser control table 166 holds a table of purchasers who purchased content, and the content distribution control section (content distribution control apparatus) 167 counts the number of changes of purchaser ID with respect to each content provided from the content management server 10 for each original purchaser of each content on the basis of the purchaser control table 166, and the change frequency database 168 stores the counting result by the content distribution control section 167 to achieve one-for-one correspondence with original purchaser of each content. And in the third embodiment, the content manager (or purchaser ID change manager) or the like refer to the counting results stored in the change frequency database 168 and pays the counter value corresponding to the counting result (change frequency) to the original purchaser.

In the event that a user possesses content with fingerprint data of other person incorporated, the user can trially use the content but is not allowed to use the content officially. In such event, in the content providing system of the third embodiment configured as above, the user does not purchase content newly but is allowed to officially use the content by changing the fingerprint data in the content which the user already possesses to the finger print data of his/her own in exchange of the counter value. This kind of procedure of changing the fingerprint data (purchaser ID) will be described as follows.

When a user hopes to change the fingerprint data (purchaser ID) of content, in the first place, the user accesses the ID changing server 16 (WWW server 160) via the network 20 from the user terminal 110 which the user possesses, and transmits the credit card information to pay the counter value and the fingerprint data of the user him/herself to the ID changing server 16 together with the content to have ID to be changed in accordance with the directions from the ID changing server 16.

The WWW server 160 transmits the credit card information transmitted from the user terminal 110 to the accounting control table 163, and this accounting control table 163 stores the accounting history of content use charge in accordance with changes of purchaser ID in the accounting database 164. Later, the content manager (or purchaser ID change manager) or the like collect content use charge (counter value) from the user through a credit card company.

On the other hand, the WWW server 160 transmits the content to have ID to be changed which was transmitted from the user terminal 110 to the purchase ID deleting section 161, and by this purchaser ID deleting section 161, the original purchaser ID (fingerprint data/minutia data) is deleted from the content to have ID to be changed. In addition, the WWW server 160 transmits the user fingerprint data transmitted from the user terminal 110 to the minutia extracting section 162 and extracts the minutia data from the fingerprint data in this minutia extracting section 102.

And in the fingerprint incorporating section 165, the minutia data from the minutia extracting section 162 is incorporated in content with purchaser ID deleted from the purchaser ID deleting section 161 as purchaser ID (biometric information) . In this way, the content with the fingerprint data incorporated, of the user who requested the ID change is transmitted from the WWW server 160 to the user terminal 110, and the purchaser ID changing transaction in content is completed.

As described above, according to the content providing system as the third embodiment of the present invention, working effects the same as those obtained with the first and the second embodiments can be obtained, and in addition, in the event that the content owner is not a legitimate purchaser, purchaser ID (fingerprint data) already incorporated in content (medium) can be changes to ID (fingerprint data) that can identify the owner individual in exchange of the counter value paid by the owner. Therefore, the content manager such as original copyright owner or the like can officially collect the content use charge (counter value) even from users who indirectly obtain content by data exchange software (file sharing software) or the like in addition to the people who officially purchase content.

Furthermore, in the ID changing server 16 of the third embodiment, the number of change times of purchaser ID for each content provided by content management server 10 is counted for each original purchaser of each content by the content distribution control section 167 in accordance with the purchaser control table 166 and the counting result is stored in the change frequency database 168. Consequently, the content manager (or the purchaser ID change manager) or the like pay the counter value associated with the accounting result stored in the change frequency database 168 to the original purchaser, and therefore the profit is restored to the purchaser who has contributed to content sales promotion and has brought profit to the content manager.

In the third embodiment described above, the content management server 10 and the ID changing server 16 are constructed separately, but a server may be constructed by integrating the functions of these servers 10, 16 into one.

[2-4] Fourth embodiment

A content providing system as the forth embodiment of the present invention corresponds to the system described in item [1-12] and referring now to Fig. 17 through Fig. 19, the fourth embodiment will be described.

Fig. 17 is a block diagram that indicates a configuration of a content providing system as the fourth embodiment of the present invention, and as shown in Fig. 17, the content providing system of the fourth embodiment is configured in the same manner as the content providing system of the first embodiment, but in this fourth embodiment, a content encryption server 10B and encrypted content player 14A are equipped in place of the content management server 10 and player 14 of the first embodiment.

In the fourth embodiment, too, the user terminal 110 and the encrypted content player 14A are possessed by the user at home, and because the user terminal 110 is configured in the same manner as in the first embodiment, the description will be omitted.

In addition, the content encryption server (content providing apparatus) 10B is installed on the Internet by the content dealer in the same manner as the content providing server 10 and controls content (digital content data) provided to purchasers, and comprises an encryption key generating section 105 and an encryption section 106, as shown in Fig. 18, in addition to the WWW server 100, content control table 101, minutia extracting section 102, accounting control table 103, accounting database 104, and fingerprint incorporating section 12 which are same as those in the first embodiment. Fig. 18 is a block diagram that indicates a configuration of a content encryption server 10B in the fourth embodiment.

The encryption key generating section (encryption key generating apparatus) 105 generates an encryption key from the minutia data (purchaser ID) extracted by the minutia extracting section 102, and the encryption section (encryption apparatus) 106 encrypts content to be provided to purchasers and generates encrypted content by the encryption key generated by the encryption key generating section 105.

And the fingerprint incorporating section 12 in the fourth embodiment incorporates the minutia data from the minutia extracting section 102 as the purchaser ID in the same manner as in the first embodiment for the encrypted content from the encryption section 106. In this way, the encrypted content with purchaser ID incorporated is transmitted to the user terminal 110 from the WWW server 100 through the network 20 and provided to the purchaser who has paid the counter value.

On the other hand, the encrypted content player (equipment, content reproducing apparatus) 14A is used when the content user uses content in the same manner as the player 14 of the first and the second embodiments, but in the fourth embodiment, the encrypted content player stores the encrypted content received by the PC 11 from the content encryption server 10B via the network 20 and reproduces this encrypted content (music data).

The encrypted content player 14A is configured by adding a decryption key generating section 146 and a decryption section 147 to a player 14 (see Fig. 11) same as that of the first embodiment, as shown in Fig. 19, or by adding a decryption key generating section 146 and a decryption section 147 to a player 14 (see Fig. 14) same as that of the second embodiment. Fig. 19 is a block diagram that indicates a configuration of the encrypted content player 14A in the fourth embodiment. In addition, in Fig. 19, an encrypted content player 14A with the encryption key generating section 146 and the encryption section 147 added to the player 14 of the first embodiment is shown, but as shown in the chain double-dashed line in Fig. 19, the encrypted content player 14A may be configured with memory 144, initialization section 145, or ID writing apparatus 15 equipped in place of the fingerprint sensor 13.

The decryption key generating section (decryption key generating apparatus) 146 generates a decryption key from purchase ID (fingerprint data/minutia data) incorporated in the encrypted content when the content user is authenticated to be the same as a legitimate purchaser by the user authentication section 143, and the decryption section (decryption apparatus) 147 decrypts the encrypted content by the decryption key generated by the decryption key generating section 146 and generates the original content. And the content reproducing section 142 in the fourth embodiment reproduces the original content obtained by the decryption section 147.

Next, the procedure for a user to purchase and reproduce content in the content providing system of the fourth embodiment configured as above is basically the same as that in the first embodiment.

However, in the content encryption server 10B, an encryption key is generated by the encryption key generating section 105 from the minutia data of fingerprint data transmitted by the user, and the content is encrypted by the use of the encryption key by the encryption section 106. And by the fingerprint incorporating section 12, the minutia data is incorporated in the encrypted content generated by the encryption section 106 as purchaser ID, and the encrypted content with minutia data incorporated is provided to the user. In such event, the minutia data is incorporated in the encrypted content and is not encrypted.

On the other hand, in the encrypted content player 14A, the user authentication section 143 carries out authentication by the use of the user fingerprint data entered from the fingerprint sensor 13 or the minutia data registered to memory 144 and the minutia data in the encrypted content. And when the user is authenticated to be the same as a legitimate purchaser by the user authentication section 143, a decryption key is generated from the minutia data in the encrypted content by the decryption key generating section 146, and by the decryption section 147, the encrypted content is decrypted by the use of the decryption key and the original content is obtained. The content obtained by the decryption key is reproduced by the content reproducing section 142.

In this way, according to the content providing system as the fourth embodiment of the present invention, working-effects same as those of the first and the second embodiments can be obtained, and in addition, even if any evil-minded third party tampers the fingerprint data in content to the fingerprint data of his/her own, it is possible for the evil-minded third party to undergo authentication of the fingerprint data, but by providing the encrypted content using the fingerprint data (purchaser ID), the encrypted content is unable to be decrypted to the original content and the content is unable to be used because the fingerprint data to generate the decryption key differs from the original fingerprint data. Consequently, even if purchaser ID (fingerprint data/minutia data) stored in content is rewritten, it is possible to definitely prevent the content from being used on a player of a user who is not the legitimate user and the right of the original copyright owner can be definitely protected.

[3] Effect of the invention

The effects or advantages obtained by the content providing system of the present invention as described above can be summarized as follows:

(1) The content use charge can be collected from a user who possesses a copy of content. For example, even if content is distributed by the network of users such as data exchange software, the use charge can be collected from the user who wants to use the content. By this, the subjects of business are expanded and a system for achieving transaction with users (users who obtained content copies) who used to be excluded from the business transaction can be established.

(2) The right of content right owner (original copyright owner) can be secured, while the content user is guaranteed for user operations (reproduction, copying, or the like) which the Copyright Law approves. That is, content is allowed to be used by the user (legitimate purchaser) only authorized for the use of the content and the user who is not authorized for the use of content cannot use the content, and the right of the original copyright owner is definitely protected. In such event, the user who is authorized for the use of content (legitimate purchaser) can use the content on all the equipment (players or the like) which the user him/herself owns and in addition, can duplicate the content insofar as the user him/herself uses, and the right of the content user can be secured, too.

By this, business to copy content users can be established and at the same time, both protection of original copyright owner right and securing of user right guaranteed under the Copyright Law are achieved.

[4] Other

The present invention shall not be limited to the embodiments described above but can be implemented with various changes and modifications made without departing from the spirit and scope of the invention.

INDUSTRIAL APPLICABILITY

As described above, according to the present invention, the purchaser identification information which can identify the purchaser individual is incorporated in the content to be provided from the content manager side to the purchaser, and the use of content is allowed only when the content user is authenticated to be the same as the legitimate purchaser by the use of the purchaser identification information. By this, it becomes possible to allow the purchaser only who has officially paid the content use charge and purchased the digital content such as music and images, or applications or the like that run on a personal computer, to use such content, and the right of the original copyright owner is sufficiently protected, while for the legitimate purchaser, implementation of operations (reproduction, copying, or the like) approved under the Copyright Law can be secured to guarantee the right of the purchaser, too. It is therefore assumed that the applicability of the present invention is remarkably high.

**Claims**

1. A content providing method for a content manager to supply content to a purchaser, comprising the steps of:

   paying price for the use of the content to the content manager by the purchaser;
   incorporating, on the content manager side, purchaser identification information, which can identify the purchaser individual who paid the price, in the content or a medium which stores the content;
   providing the content or the medium, in which the purchaser identification information is incorporated, from the content manager side to the purchaser; and
   authenticating whether or not user of the content is the legitimate purchaser using the purchaser identification information incorporated in the content or the medium in order to permit the user of the content to use the content only when the user of the content is the legitimate purchaser.

2. The content providing method according to claim 1, further comprising a step of acquiring the purchaser identification information from the purchaser who has paid the price in order to incorporate the purchaser identification information in the content or the medium.

3. The content providing method according to claim 2, further comprising a step of acquiring user identification information, which can identify the user individual, from the user of the content for carrying out the authentication,
   wherein the authentication is carried out by comparing the acquired user identification information with the purchaser identification information incorporated in the content or the medium.

4. The content providing method according to claim 2, further comprising a step of acquiring user identification information, which can identify the user individual, from the user of the content for carrying out the authentication and registering in advance the user identification information to the instrument (14) which is used when the user uses the content,
   wherein the authentication is carried out by comparing the user identification information registered in advance to the instrument (14) with the purchaser identification information incorporated in the content or the medium when the user uses the content with the instrument (14).

5. The content providing method according to claims 3 or 4, wherein biometric information of the purchaser or minutia data extracted from the biometric information of the purchaser is used as the purchaser identification information, and,
   biometric information of the user or the characteristics point data extracted from the biometric information of the user is used as the user identification information.

6. The content providing method according to any one of claims 1-5, further comprising the steps of:

generating an encryption key from the purchaser identification information; and
encrypting the content by the encryption key to obtain the encrypted content,

wherein the purchaser identification information is incorporated in the encrypted content or the medium, and the encrypted content or the medium, in which the purchaser identification information is incorporated, is provided from the content manager side to the purchaser who paid the price.

7. The content providing method according to claim 6, further comprising the steps of:

generating a decryption key from the purchaser identification information incorporated in the encrypted content or the medium in the event that the user of the content is authenticated as the legitimate purchaser; and
decrypting the encrypted content by the decryption key to obtain the original content.

8. A content providing system for providing content to a purchaser who has paid price for the use of the content, comprising:

a content management server (10) which controls the content to be provided to the purchaser;
a purchaser identification information incorporating section (12) which incorporates purchaser identification information, which can identify the purchaser individual who has paid the price, in the content to be provided from the content management server (10) to the purchaser or in a medium in which the content is stored;
an instrument (14) which is used when a user of the content uses the content; and
an authentication apparatus which authenticates whether or not a user of the content is the legitimate purchaser using the purchaser identification information incorporated in the content or the medium in order to allow the use of the content by the instrument (14) only when the user of the content is the legitimate purchaser.

9. The content providing system according to claim 8, wherein the authentication apparatus is incorporated in the instrument (14).

10. The content providing system according to claim 9, further comprising:

a purchaser identification information input section (11) for the purchaser to input the purchaser identification information.

11. The content providing system according to claim 10, further comprising:

a user identification information input section (13) for the user of the content to input user identification information that can identify the user individual in order to carry out the authentication by the authentication apparatus,

wherein the authentication apparatus carries out the authentication by comparing the user identification information input from the user identification information input section (13) with the purchaser identification information incorporated in the content or the medium.

12. The content providing system according to claim 10, further comprising:

a user identification information writing apparatus for acquiring user identification information that can specify the user individual from the user of the content to carry out the authentication by the authentication apparatus and for writing and registering the user identification information in the instrument (14) in advance,

wherein the authentication apparatus carries out authentication by comparing the user identification information registered in the instrument (14) with the purchaser identification information incorporated in the content or in the medium when the user uses the content with the instrument (14).

13. The content providing system according to claim 12, wherein multiple pieces of user identification information, which can identify multiple user individuals, respectively, are written and registered in the instrument (14) by the user identification information writing apparatus, and

the authentication apparatus compares the multiple pieces of user identification information registered in the instrument (14) with the purchaser identification information incorporated in the content or in the medium and allows the use of the content in the instrument (14) upon accreditation in which any one of the multiple pieces of user identification information coincides with the purchaser identification information.

14. The content providing system according to claims 12 or 13, wherein the user identification information writing apparatus is installed in a store that sells the instrument (14),

when a user who uses the instrument (14) purchases the instrument (14) at the store, the user identification information of the user is written and registered in the instrument (14) by the user identification information writing apparatus.

**15.** The content providing system according to any one of claims 12-14, wherein an initialization apparatus, which initializes and deletes the user identification information written and registered to the instrument (14), is equipped in the instrument (14).

**16.** The content providing system according to any one of claims 12-15, wherein trial use information which prescribes trial use allowable range of the content is added in the content,

even when it is accredited that the user of the content is not a legitimate purchaser by the authentication apparatus, the use of the content with the instrument (14) is allowed within the range which conforms to the trial use information.

**17.** The content providing system according to claim 16, wherein information concerning a procedure for receiving the content from the content management server (10) is added to the content.

**18.** The content providing system according to any one of claims 11-17, wherein biometric information of the purchaser or minutia data extracted from the biometric information of the purchaser is used as the purchaser identification information, and,

biometric information of the user or minutia data extracted from the biometric information of the user is used as the user identification information.

**19.** The content providing system according to claim 18, wherein, when the purchaser identification information completely coincides with the user identification information, the authentication apparatus accredits that the user is not a legitimate purchaser and refuses the use of the content.

**20.** The content providing system according to any one of claims 8-19, further comprising:

a purchaser identification information changing apparatus which changes the purchaser identification information which has already been incorporated in the content or in the medium to another purchaser identification information,

wherein in the event that an owner of the content is not a legitimate purchaser, the purchaser identification information changing apparatus changes, in exchange of the price paidbytheowner, the purchaser identification information which has already been incorporated in the content or in the medium to the identification information that can identify the owner individual.

**21.** The content providing system according to claim 20, further comprising:

a purchaser management table for holding a list of purchasers who purchased the content; and a content distribution management apparatus that counts, on the basis of the purchaser management table, the number of changes of the purchase identification information on each content provided from the content management server (10) according to the original purchaser of each content,

wherein the price that complies with the number of changes counted by the content distribution management apparatus is paid to the original purchaser.

**22.** The content providing system according to any one of claims 8-21, further comprising:

an encryption key generating apparatus which generates an encryption key from the purchaser identification information; and an encryption apparatus which encrypts the content by the encryption key generated by the encryption key generating apparatus and obtains the encrypted content,

wherein the encrypted content or the medium with the purchaser identification information incorporated by the purchaser identification information incorporating section (12) is provided to the purchaser who has paid the price.

**23.** The content providing system according to claim 22, further comprising:

a decryption key generating apparatus which generates a decryption key from the purchaser identification information incorporated in the encrypted content or in the medium when a user of the content is authenticated as the legitimate purchaser by the authentication apparatus; and a decryption apparatus which decrypts the encrypted content by the decryption key generated by the decryption key generating apparatus and obtains the original content.

**24.** A content providing apparatus which provides content to a purchaser who has paid price for the use of the content, comprising:

a content holding section which holds the content to be provided to the purchaser; and a purchase identification information incorporating section which incorporates the purchaser identification information which can identify the purchaser individual in the content to be provided to the purchaser or in the medium which stores the content.

25. The content providing apparatus according to claim 24, further comprising:

a purchaser identification information input section for inputting the purchaser identification information.

26. The content providing apparatus according to claims 24 or 25, further comprising:

an encryption key generating section which generates an encryption key from the purchaser identification information; and an encryption section which encrypts the content by the encryption key generated by the encryption key generating section and obtains the encrypted content,

wherein the encrypted content or the medium with the purchaser identification information incorporated by the purchaser identification information incorporating section is provided to the purchaser who has paid the price.

27. The content providing apparatus according to any one of claims 24-26, wherein biometric information of the purchaser orminutia data extracted from the biometric information of the purchaser is used as the purchaser identification information.

28. A content reproducing apparatus which reproduces content with purchaser identification information which can identifies the purchaser, or which reproduces content in a medium with the purchaser identification information incorporated in advance, comprising:

a user identification information input section for inputting user identification information which can identify the user individual who reproduces the content; and an authentication section that authenticates whether or not a user of the content is a legitimate purchaser by comparing the purchaser identification information with the user identification information input from the user identification information input section,

wherein reproduction of the content is allowed only when the user of the content is authenticated as the legitimate purchaser by the authentication section.

29. The content reproducing apparatus according to claim 28, wherein the content is provided as an encrypted content which is encrypted by an encrypted key generated from the purchaser identification information, further comprising:

a decryption key generating section that generates a decryption key from the purchaser identification information when a user of the content is authenticated as the legitimate purchaser by the authentication section; and a decryption section which decrypts the encrypted content by the decryption key generated by the decryption key generating section and obtains the original content.

30. The content reproducing apparatus according to claims 28 or 29, wherein biometric information of the purchaser or minutia data extracted from the biometric information of the purchaser is used as the purchaser identification information and,

biometric information of the user or minutia data extracted from the biometric information of the user is used as the user identification information.

31. A content reproducing apparatus which reproduces content with purchaser identification information which can identifies the purchaser, or which reproduces content in the medium with the purchaser identification information incorporated in advance, comprising:

a user identification information storing section for storing user identification information which can identify the user individual who uses the content reproducing apparatus and which is written and registered in advance; and an authentication section which authenticates whether or not a user of the content is a legitimate purchaser by comparing the purchaser identification information with the user identification information input from the user identification information input section,

wherein reproduction of the content is allowed only when the user of the content is authenticated as the legitimate purchaser by the authentication section.

32. The content reproducing apparatus according to claim 31, wherein multiple pieces of user identification information, which can identify multiple user individuals, respectively, are written and registered in the user identification information storing section, and

the authentication section compares the purchaser identification information with the multiple pieces of user identification information registered to the user identification information storing section, and allows the reproduction of the content upon accreditation in which the purchaser identification information coincides with any one of the multiple pieces of user identification information.

33. The content reproducing apparatus according to claims 31 or 32, further comprising a user identification information writing section which acquires the user identification information and writes and registers to the user identification information storing section.

34. The content reproducing apparatus according to any one of claims 31-33, further comprising an initializing section which initializes and deletes the user identification information written and registered to the user identification information storing section.

35. The content reproducing apparatus according to any one of claims 31-34, wherein the content is provided as encrypted content which is encrypted by an encryption key generated from the purchaser identification information, further comprising:

 a decryption key generating section which generates a decryption key from the purchaser identification information when the user of the content is authenticated as the legitimate purchaser by the authentication section; and
 a decryption section which decrypts the encrypted content by the decryption key generated by the decryption key generating section and obtains the original content.

36. The content providing system according to any one of claims 31-35, wherein biometric information of the purchaser or minutia data extracted from the biometric information of the purchaser is used as the purchaser identification information, and,
 biometric information of the user or minutia data extracted from the biometric information of the user is used as the user identification information.

# FIG. 1

```
                    START

              CHOOSE CONTENT TO BE        S1
              PURCHASED BY CONTENT
                    USER

               INPUT PURCHASER ID         S2
               TOGETHER WITH PRICE

              GENERATE CONTENT WITH       S3
                  PURCHASE ID

                STORE CONTENT WITH        S4
              PURCHASER ID IN PLAYER
                WHICH USER OWNS

              INPUT USER ID IN PLAYER     S5

                                    S6
                                          REFUSED
              ID AUTHENTICATION

                  AUTHENTICATED

               REPRODUCE CONTENT          S7

                     END
```

FIG. 2

## FIG. 3

EP 1 519 286 A1

# FIG. 4

```
        ( START )
            |
            v
+---------------------------+   S11
|      INSERT PLAYER        |
+---------------------------+
            |
            v
+---------------------------+   S12
|   INPUT USER ID IN PLAYER |
+---------------------------+
            |
            v
+---------------------------+   S13
|  CHOOSE CONTENT TO BE     |
|  PURCHASED BY CONTENT     |
|         USER              |
+---------------------------+
            |
            v
+---------------------------+   S14
|   INPUT PURCHASER ID      |
|   TOGETHER WITH PRICE     |
+---------------------------+
            |
            v
+---------------------------+   S15
|  GENERATE CONTENT WITH    |
|     PURCHASER ID          |
+---------------------------+
            |
            v
+---------------------------+   S16
|   STORE CONTENT WITH      |
|  PURCHASER ID IN PLAYER   |
|     OWNED BY USER         |
+---------------------------+
            |
            v          S17
      < ID AUTHENTICATION >----- REFUSED
            |                       |
      AUTHENTICATED                 |
            |                       |
            v                       |
+---------------------------+  S18  |
|    REPRODUCE CONTENT      |       |
+---------------------------+       |
            |                       |
            |<----------------------+
            v
         ( END )
```

EP 1 519 286 A1

## FIG. 5

FINGERPRINT

EXTRACTION OF MINUTIAE
(RIDGE BIFURCATION)

EXTRACTION OF MINUTIAE
(RIDGE ENDING)

FINGER

FINGERPRINT IMAGE DATA

MINUTIA DATA

# FIG. 6

CONTENT MANAGER

[CONTENT (WITH FINGERPRINT DATA OF USER B)] A5

[CONTENT + FINGERPRINT DATA + CONTENT PRICE] A4

A2 [CONTENT (WITH FINGERPRINT DATA OF USER A)]

A1 [FINGERPRINT DATA + CONTENT PRICE]

USER B

CONTENT

CONTENT

A3 CONTENT

USER A

CONTENT

COPY PREPARATION

PLAYER 1    PLAYER 2    PORTABLE PLAYER    PC

PLAYER 1    PLAYER 2    PORTABLE PLAYER    PC

EP 1 519 286 A1

34

# FIG. 7

PURCHASE CONTENT

FINGERPRINT DATA A

S21

GENERATE ENCRYPTION KEY → ENCRYPTION KEY

CONTENT DATA → ENCRYPTION → ENCRYPTED CONTENT → ADD FINGERPRINT DATA A → ENCRYPTED CONTENT WITH FINGERPRINT DATA

S22

S23

CONTENT USER (USER)

S25

FINGERPRINT DATA A IN CONTENT

DECRYPTION KEY ← GENERATE DECRYPTION KEY

CONTENT DATA ← DECRYPTION ← ENCRYPTED CONTENT ← AUTHENTICATE FINGERPRINT DATA A&B

S26

FINGERPRINT DATA B

S24

USE CONTENT

EP 1 519 286 A1

# FIG. 8

FIG. 9

EP 1 519 286 A1

FIG. 10

# FIG. 11

# FIG. 12

USER TERMINAL

CONTENT MANAGEMENT SERVER
(WWW SERVER)

ACCESS TO WWW SERVER: S31

S32: SUBMIT CONTENT LIST

SELECT CONTENT: S33

S34: NOTIFY PURCHASE PROCEDURE

APPROVE PURCHASE: S35

S36: REQUEST CARD INFORMATION ENTRY

INPUT CARD INFORMATION: S37

S38: REQUEST FINGERPRINT DATA ENTRY

TRANSMIT FINGERPRINT DATA: S39

S40: NOTIFY DOWNLOAD
     PREPARATION COMPLETION

REQUEST DOWNLOAD: S41

S42: DOWNLOAD CONTENT

NOTIFY TRANSACTION COMPLETION: S43

FINISH TRANSACTION

EP 1 519 286 A1

FIG. 13

FIG. 14

EP 1 519 286 A1

## FIG. 15

## FIG. 16

**161** DELETING SECTION → CONTENT WITH USER INFORMATION DELETED → **165** FINGERPRINT INCORPORATING SECTION

**16**

**164** ACCOUNTING DATABASE

**163** ACCOUNTING CONTROL TABLE

**162** MINUTIA EXTRACTING SECTION

**168** CHANGE FREQUENCY DATABASE

**167** CONTENT DISTRIBUTION CONTROL SECTION

**160** WWW SERVER

FINGERPRINT DATA

**20**

**166** PURCHASER CONTROL TABLE

EP 1 519 286 A1

# FIG. 17

FIG. 18

EP 1 519 286 A1

FIG. 19

14A

CONTENT
REPRODUCING
SECTION — 142

DECRYPTION
SECTION

DECRYPTION KEY
GENERATING
SECTION — 146

147

143

USER AUTHENTICATION
SECTION

141

CONTENT HOLDING

144

145

13

FINGERPRINT
SENSOR

15

EP 1 519 286 A1

## INTERNATIONAL SEARCH REPORT

| | International application No. |
|---|---|
| | PCT/JP02/06581 |

**A. CLASSIFICATION OF SUBJECT MATTER**
Int.Cl⁷ G06F17/60, G06F15/00, G06F12/14

According to International Patent Classification (IPC) or to both national classification and IPC

**B. FIELDS SEARCHED**

Minimum documentation searched (classification system followed by classification symbols)
Int.Cl⁷ G06F17/60, G06F15/00, G06F12/14

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)
JICST FILE(JOIS)

**C. DOCUMENTS CONSIDERED TO BE RELEVANT**

| Category* | Citation of document, with indication, where appropriate, of the relevant passages | Relevant to claim No. |
|---|---|---|
| X | JP 2002-152490 A (Fujitsu Ltd.), | 1-12,24-31 |
| Y | 24 May, 2002 (24.05.02), | 13-23,32-36 |
| | (Family: none) | |
| X | JP 2002-32137 A (Hudson Co., Ltd.), | 1-12,24-31 |
| Y | 31 January, 2002 (31.01.02), | 13-23,32-36 |
| | (Family: none) | |
| X | JP 2002-16597 A (Victor Company Of Japan, Ltd.), | 1-12,24-31 |
| Y | 18 January, 2002 (18.01.02), | 13-23,32-36 |
| | (Family: none) | |
| Y | JP 2002-100116 A (Sony Corp.), | 13-23,32-36 |
| | 05 April, 2002 (05.04.02), | |
| | (Family: none) | |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>23 July, 2002 (23.07.02) | Date of mailing of the international search report<br>06 August, 2002 (06.08.02) |
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

International application No.

PCT/JP02/06581

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2001-283223 A (Cyber Sign Japan Inc.),<br>12 October, 2001 (12.10.01),<br>(Family: none) | 19-23 |
| Y | JP 2002-99466 A (Sony Corp.),<br>05 April, 2002 (05.04.02),<br>(Family: none) | 20-23 |

Form PCT/ISA/210 (continuation of second sheet) (July 1998)